# EUROPEAN PATENT APPLICATION

(11) **EP 4 649 917 A1**
(43) Date of publication of application: **19.11.2025**
(21) Application number: 24741078.0
(22) Date of filing: 15.01.2024
(51) Int. Cl.: A61C 8/00, A61C 13/225, A61C 13/10, A61C 13/12

(54) **SYSTEM FOR CONVERTING A REMOVABLE DENTAL PROSTHESIS INTO A FIXED DENTAL PROSTHESIS, PROSTHESIS FIXING CYLINDER, SEALING ELEMENT, AND METHOD FOR CONVERTING A REMOVABLE DENTAL PROSTHESIS INTO A FIXED DENTAL PROSTHESIS**

(30) Priority: 13.01.2023 BR 202023000670 U
(71) Applicant: JJGC Indústria E Comércio De Materiais Dentários S.A., 81270-200 Curitiba - PR (BR)
(72) Inventor: THOMÉ, Geninho, 80240-170 Curitiba-PR (BR); DA FONSECA JUNIOR, Gilberto Aparecido Pinto, 82810-180 Curitiba-PR (BR); DE QUEIROZ, Tiago Nunes, 83602-030 Curitiba-PR (BR); GOBBO, Karla Santos, 83430-000 Curitiba-PR (BR); SOARES, Francielly Moura de Souza, 81070-310 Curitiba-PR (BR); BERNARDES, Sergio Rocha, 81220-110 Curitiba-PR (BR)
(74) Representative: Schaad, Balass, Menzl & Partner AG
(86) International application number: PCT/BR2024/050012
(87) International publication number: WO 2024/148414

(57) **Abstract**

The present invention relates to a system of converting removable prostheses into fixed ones, comprising at least one removable dental prosthesis; at least two dental implants 40, on which two intermediate prosthetic components 30 are arranged wherein each receive a fixation cylinder 10 provided with a central hole and temporarily passed through this center by a sealing component 50, and wherein said sealing component 50 has diameter dimensions compatible with the sealing of said hole centrally arranged in the cylinder 10.

Furthermore, the present invention describes embodiments of the sealing component 50, the cylinder 10 and methods applicable to the office and laboratory environment involving said components.

## Description

### Field of Application

The present invention belongs to the field of dentistry, more precisely to the fields of prosthetics and systems for replacing teeth in edentulous patients with the aid of implants. Thus, the invention relates to an improved system for transforming a removable dental prosthesis into a fixed prosthesis by means of implants, whether single or multiple.

### State of the Art

As is well known, the human body functions perfectly when all its structures and organs are intact and in perfect working order, however, whenever there is an irregularity in any of the various body components, the individual may feel pain, have trouble moving or face other disorders that may be simple or extremely serious. One of these disorders is the impairment of masticatory, vocal and aesthetic functions that occurs when, for whatever reason, the individual loses one or more teeth.

There are some known ways to reduce or eliminate this problem, such as the installation of removable or fixed dental prostheses. Removable prostheses can be used to replace some or all of the teeth, can be rigid or flexible and can be freely removed and replaced by the patient, as needed. The main types of removable prostheses are (i) the denture or removable total prosthesis, to replace all of the teeth in the dental arch, (ii) the mobile bridge or RPD (removable partial denture) adopted when the patient still has remaining teeth in the dental arch, which are used to attach the prosthesis' fixing clips, and (iii) overdenture, also called removable dental prosthesis on implants, designed to replace all of the teeth in a dental arch, with the implants fixing the support element, to which the prosthesis will be attached and can be removed for cleaning whenever necessary. Fixed prosthetics, in turn, require the installation of implants in the patient's bone structure, on which single or multiple prosthetics will be attached and cemented - which makes them fixed as if they were the patient's natural teeth.

However, fixed prostheses are much more practical for patients because, in addition to eliminating the need for constant removal for cleaning, they also ensure adequate masticatory and aesthetic function throughout the day, including during rest periods. In addition, the fixed prosthesis eliminates the risk of unwanted decoupling of the prosthesis during use, which can cause problems for the user. Due to these advantages, many patients who use removable prostheses wish to switch to fixed prostheses, but the time and costs required to make a new prosthesis are usually deterrents. An economical and viable alternative would be to transform the existing removable prosthesis into a fixed prosthesis.

Some techniques have already been developed for this purpose, such as the one disclosed in the US patent 6,506,052, which, in order to allow the fixed use of a removable denture, requires the installation of bars on pins (implants) that are inserted and cemented into the bone of the patient's dental arch. Cutouts are made in the lower portion of the existing removable denture to attach it to the aforementioned bars. The denture is then attached to the bars using clip-shaped fasteners or with the aid of an O-ring system. In this case, the proper attachment of the denture to the implant system is completed with the use of acrylic adhesive, which makes the attachment semi-permanent since the adhesive can be removed to remove the prosthesis if necessary. However, this technique, in addition to being very laborious, mainly due to the installation of the support bars, requires a lot of chair time and many elements to complete, which makes it significantly expensive and inaccessible to a large part of the population. Furthermore, there is no positional precision for drilling the recesses that are made in the denture to accommodate such bars, which can cause serious alignment problems and, consequently, installation problems - remembering that depending on the action required to correct the misalignment, it may permanently make the use of the prosthesis unfeasible.

Another technique for converting a removable prosthesis into a fixed one was described in the US patent 11,311,354, which initially requires the installation of implants and components (or abutments) in the patient's dental arch. Then, a fixation cylinder (or coping) must be installed over the component, and an elongated pin is inserted into its central hole, the lower portion of which is cylindrical and provided with a thread for attachment to the internal thread of the component. The upper portion of said pin is smooth and has a quadrangular cross-section to allow the coupling (by means of frictional retention force) of a cap, as a detachable upper portion, which rests on the top surface of the cylinder and, therefore, helps to maintain the coping in the correct position. It is important to note that the cap is joined to the body portion by friction, which keeps it in a separable mode from said body. The conversion process then follows the following steps: (i) using carbon or a similar technique, the positioning of the coping is marked on the base of the prosthesis and, with the help of a drill, (ii) a recess is made to accommodate the coping in the prosthesis; (iii) acrylic or resin material is applied to the base of the prosthesis to carry out the coping capture process; (iv) the prosthesis is positioned in the patient's mouth so that the patient can use his or her occlusion force to surround the coping with the resin; (v) the resin is allowed to cure; (vi) the prosthesis is removed from the patient's mouth, taking the cylinder and cap with it, and the pin is expected to remain attached to the abutment; (vii) a suitable wrench is used to remove the pin that, after removing the prosthesis with the cap and cylinder, was threaded into the abutment; (viii) with the aid of drills, open through holes in the locations where the cylinders captured by the resin are located, in the base-crown direction, and these holes will be the references for inserting the screws that will fix the prosthesis to the components; (ix) use larger drills, in the crown-base direction, to enlarge the holes already made in the prosthesis to a diameter equivalent to that of the head of the fixation screw; (x) position the prosthesis in the place of use and fix it to the components already installed by inserting and threading the fixation screws into the through holes of the prosthesis; and (xi) fill the holes in the prosthesis with suitable material and perform the final finishing.

Despite fulfilling its purpose, the technique described in the aforementioned document has some drawbacks, such as the use of several individual parts with extremely small dimensions (pin and cap that can be separated from this pin), which need to be handled in the intraoral environment and can easily escape during handling and even be swallowed by the patient, causing serious problems. After capturing the cylinder and cap with the acrylic material from the base of the prosthesis, the implantologist will still have to unscrew the pin that remained attached to the component before he/she can start fixing the prosthesis. This procedure is completely contrary to what is proposed by the present invention. In general terms, the sealing component proposed by the invention is extracted together with the prosthesis once the resin has cured, so there is no need to remove any additional pin. Document US 11,311,354 therefore refers to a technique that is excessively demanding and risky for both the professional and the patient. Another important limitation to be highlighted in relation to document US 11,311,354 is that no proposals for guides for opening reference holes in the procedure for converting removable prostheses into fixed ones are described. It should be noted that the guide element has an important function of guiding the drill during drilling, in order to maintain the conversion technique in complete safety. On the other hand, a procedure performed without the guide exposes the patient and the dentist to a clear risk of damaging the cylinder, completely condemning the technique.

It is therefore clear that the current state of the art lacks more practical, safe, effective solutions that offer good cost-benefit to convert a removable prosthesis into a fixed one.

### Objects of the Invention

The present invention therefore aims to provide a solution that enables the procedure of converting a removable prosthesis into a fixed one, whether for definitive use or for temporary use during the period of manufacture of a possible definitive prosthesis.

Another objective of the present invention is to present a method that technically allows the intended conversion of removable prostheses into fixed ones, this method being applied in the office environment, in the laboratory, in multiple prostheses, or, optionally, partial prostheses.

Additionally, one of the objectives of the invention in question is to provide a conversion method that does not require the excessive use of tiny, loose parts, especially in the intraoral environment, in order to promote greater safety, especially for the patient.

### Brief Description of the Invention

The present invention initially relates to a system of converting removable dental prostheses into fixed dental prostheses, wherein said system comprises at least one removable dental prosthesis; at least two dental implants 40, on which are arranged two intermediate prosthetic components 30, each receiving a fixation cylinder 10 provided with a central hole and temporarily passed through this center by a sealing component 50, and wherein said sealing component 50 has diameter dimensions compatible with the sealing of said hole centrally arranged in the cylinder 10.

Optionally, the described system may comprise four or a plurality of dental implants 40 suitably arranged in the mandible or maxilla of a patient, so that the distribution positioning of said implants coincides with a drilling performed in the mobile prosthesis to be converted into a fixed prosthesis.

In preferred embodiments of the invention, the intermediate prosthetic components 30 to be used are preferably of the mini-pillar type. In addition, the described system may further include a set of tools with an interface compatible with the implants 40, the intermediate prosthetic components 30, the sealing elements 10 and implant fixation screws selected for use, in addition to a resin or other conformable material.

The fixation cylinders 10 provided for in the system described herein are preferably externally provided with grooves and protrusions that favor the adhesion of resin, as well as comprising a physical structure that hinders the rotation movement after their placement on the prosthetic components 30.

In turn, the sealing component 50 provided for in the system of the invention is fully extracted together with the cylinder 10 when removing the prosthesis from the patient's mouth, once the resin has cured. Furthermore, said sealing component 50 is replaced by an implant fixation screw once the steps involving the application and curing of the resin have been completed, and once the adjustments of the removable prosthesis have been completed, wherein said adjustments comprise actions selected from the removal of the region compatible with the palate in the case of a maxillary prosthesis, the angulation of the external region compatible with the gum, and the finishing of protrusions resulting from the drilling process.

Additionally, the present invention relates to a fixation cylinder for a dental prosthesis, capable of interfacing the fixation of a removable dental prosthesis from its base to at least one implant 40 applied to the patient. Said cylinder 10 has a base compatible in shape with the upper end of an intermediate prosthetic component 30 arranged between the cylinder 10 itself and the at least one implant 40, and the external face of said cylinder 10 is provided with means facilitating adhesion to conformable materials, in addition to the central region of said cylinder 10 being provided with a passage capable of receiving a sealing component 50 or an implant fixation screw.

Another embodiment provided for by the present invention relates to a fixation cylinder for a dental prosthesis, capable of interfacing the fixing of a removable dental prosthesis from its base to at least two implants applied to the patient, wherein said cylinder 10.1 has a body in the frustoconical shape, defined by an annular base 11 with an external diameter equivalent to the diameter of a flat platform 31 of an intermediate prosthetic component 30. In addition, said fixation cylinder 10.1 has a lower region 12 with a frustoconical profile and is provided with a toroidal contour rib 13, with also an upper region 14 constituted by frustoconical platforms 15 arranged parallel to each other and with progressively smaller external diameters in the upward direction. Said frustoconical platforms 15 are joined to each other by cylindrical recesses 16 and provided, on one or both sides, with vertical cutouts 17 applied to two or more platforms 15.

Additionally, said fixation cylinder 10.1 has a flat top surface 18 and is provided with a central circular opening 19 for access to an internal cylindrical compartment. In this case, the internal cylindrical compartment extends downwards until reaching a perimeter platform 20 provided with an internal mid hole 21 with a smaller diameter than that of the circular opening 19, but with a diameter corresponding to the passage of a sealing component 50 or a fixation screw. Below said perimeter platform 20 there is a second internal compartment 22 with dimensions equivalent to those of the upper portion of the intermediate prosthetic component 30.

Yet another embodiment provided for by the present invention comprises a fixation cylinder for a dental prosthesis, capable of interfacing the fixing of a removable dental prosthesis from its base to at least two implants applied to the patient, wherein said fixation cylinder 10.2 has a body in the frustoconical shape, defined by an annular and convex region 110.1, the closure of the external diameter of which coincides with a diameter of a flat platform 31 of an intermediate prosthetic component 30. Said fixation cylinder 10.2 has a toroidal contour rib 130 arranged above the annular and convex region 110.1 and with a reduction in diameter in relation to the region 110.1 itself. Furthermore, said fixation cylinder 10.2 has a second diameter reduction 110.2 preceding the arrangement of a set of three frustoconical platforms 15 joined together by cylindrical recesses 16 with a diameter reduction up to a minimum corresponding to the diameter of a sealing component 50, wherein one or more of said three frustoconical platforms 15 are provided on one or both sides with vertical cutouts 17.

Furthermore, said fixation cylinder 10.2 has a flat top surface 18 and is provided with a central circular opening 19 for access to an internal cylindrical compartment, with the internal cylindrical compartment extending downwards until reaching a perimeter platform 20 provided with an internal mid hole 21 with a smaller diameter than that of the circular opening 19, but with a diameter corresponding to the passage of a sealing component or a fixation screw, and below said perimeter platform 20 there is a second internal compartment 22 with dimensions equivalent to those of the upper portion of the prosthetic component 30.

Another embodiment provided for by the present invention relates to a fixation cylinder for a dental prosthesis, capable of interfacing the fixing of a removable dental prosthesis from its base to at least two implants applied to the patient. Said fixation cylinder 10.3 has a body in the frustoconical shape, defined by an annular support region 110.1a for a convex annular region 110.1, the closure of the external diameter of which of these two elements together coincides with the diameter of the flat platform 31 of an intermediate prosthetic component 30. In addition, said fixation cylinder 10.3 is provided with a toroidal contour rib 130 after the annular and convex region 110.1 in an upward direction, which promotes a reduction in diameter in relation to the region 110.1 itself. Also, said fixation cylinder 10.3 is provided with a second reduction in diameter in an upward direction, which precedes a first platform 15.a with a ridged shape that introduces the arrangement of a set of frustoconical platforms 15 joined together by cylindrical recesses 16, wherein said set comprising three platforms 15 is interspersed by two recesses 16 promoting a reduction in diameter to a minimum corresponding to the diameter of a sealing component 50, and wherein one or more of said three frustoconical platforms 15 are provided on one or both sides with vertical cutouts 17.

For this embodiment, said fixation cylinder 10.3 has a flat top surface 18 and is provided with a central circular opening 19 for access to an internal cylindrical compartment. Said internal cylindrical compartment extends downward until reaching a perimeter platform 20 provided with an internal mid hole 21 with a smaller diameter than that of the circular opening 19, but with a diameter corresponding to the passage of a sealing component or a fixation screw, wherein below said perimeter platform 20 there is a second internal compartment 22 with dimensions equivalent to those of the upper portion of the prosthetic component 30.

Additionally, the present invention relates to a plurality of embodiments of a cylinder sealing component against the entry of conformable materials in prosthetic procedures, for arrangement on an intermediate prosthetic component 30, wherein said sealing component 50 is manufactured in flexible material preferably of the polymer type and comprises a lower rod 51 whose lower end has threaded means and is provided with a pre-hole 512. Said sealing component 50 also comprises an upper region provided with a final section 55 with a diameter greater than the diameter of a circular opening 19 in a top surface 18 of the cylinder. Furthermore, said sealing component 50 is firmly fixed to the cylinder by means of the application of controlled torque through a tool inserted in a hole 57 available in the center of a top surface 56, and is subjected to extraction together with the cylinder, both adhered to the conformable material arranged in the prosthesis, after the material curing procedure.

Other embodiments of the cylinder sealing component against the entry of conformable materials in prosthetic procedures, for arrangement on an intermediate prosthetic component 30, comprise a sealing component 50 manufactured in flexible material, preferably of the polymer type, wherein a lower rod 51 is provided, the lower end of which has threaded means and is provided with a pre-hole 512, in addition to an intermediate region the lower portion of which has a diameter greater than the diameter of an internal mid hole 21 of an internal perimeter platform 20, located in the middle region of the cylinder. Said sealing component 50, in these alternative embodiments, comprises an upper region provided with a final section 55 with a diameter adjusted to the diameter of a circular opening 19 in a top surface 18 of the cylinder. Furthermore, the described sealing component 50 is firmly fixed to the cylinder by means of the application of controlled torque through a tool inserted into a hole 57 available at the center of a top surface 56, and is subjected to extraction together with the cylinder, both adhered to the conformable material arranged in the prosthesis, after the material curing procedure.

It is an additional object of the invention to describe a method of converting removable dental prosthesis into fixed dental prosthesis, in a dental office environment, where said method comprises the following steps:
- (1) removing the removable denture from the patient's mouth;
- (2) installing implants (40) in the patient's mandible or maxilla, and fixing a prosthetic component (30) on each implant (40);
- (1000) positioning a dental carbon sheet over the sets comprising dental implant (40) and prosthetic component (30) already installed in the patient's oral cavity;
- (1002) drilling cavities in the base of the existing prosthesis, at the locations marked by carbon, which correspond to the position of the prosthetic components (30) and, therefore, of the fixation cylinders (10);
- (1003) positioning the fixation cylinder (10, 100) on the prosthetic component (30) and, using a torque tool, rotating the sealing component (50, 600, 700, 800, 900) until it is observed that the cylinder (10, 100) is firmly attached to the prosthetic component (30);
- (1004) repeating step (1003) for all prosthetic components (30) installed on implants (40) in the patient's oral cavity;
- (1005) applying a layer of polymerizable acrylic resin for dental use over the base, or hollow channel of the base of the existing prosthesis;
- (1006) applying a layer of polymerizable acrylic resin for dental use around the fixation cylinders (10, 100), whose circular openings (19) are properly sealed by the sealing components (50, 600, 700, 800, 900);
- (1007) Positioning the existing prosthesis at the place of use in the patient's mouth, and asking the patient to exert gentle occlusal force until the acrylic resin has solidified;
- (1008) after the acrylic resin has completely solidified, removing the prosthesis comprising the conversion system incorporated into its base from the patient's oral cavity;
- (1009) sanding the base of the prosthesis to remove excess resin and make it uniform;
- (1010) attaching a fine drill bit to the inside of the pre-hole (512) of the sealing component (50, 600, 700, 800 and 900), and drilling a hole called a "chimney" in the prosthesis, from the base towards the teeth, for subsequent insertion of a fixation screw; repeating this procedure for all fixation cylinders (10, 100) incorporated into the base of the prosthesis;
- (1011) using a drill compatible with the fixation screw to be used, enlarging the diameter of the chimneys by drilling them in the direction of the teeth towards the base of the prosthesis;
- (1012) uniformizing the resin on the prosthesis base, polishing it and finishing it;
- (1013) positioning the prosthesis in the place of use and, with the aid of a torque tool, inserting the fixation screws into the chimneys and screwing them into the prosthetic components (10, 100) so that the prosthesis is fixed in the patient's mouth;
- (1014) Applying resin to close the chimneys and completing the installation.

Finally, the invention also describes a method of converting removable dental prostheses into fixed dental prostheses in a laboratory environment, wherein said method comprises the following steps:
- (1) removing the removable denture from the patient's mouth;
- (2) installing the implants (40) in the patient's mandible or maxilla, and fixing a prosthetic component (30) on each implant (40);
- (2000) attaching a transfer to each prosthetic component (30) and making a mold of the patient's arch with the aid of a mold;
- (2001) after the appropriate waiting period, removing the mold containing the transfers that were captured during the impression from inside the patient's mouth;
- (2002) optionally, installing a healing cap or cover screw over each prosthetic component (30, 300) so that they remain there during the period of conversion of the prosthesis to be made in the laboratory;
- (2003) installing an analogue of the prosthetic component (30, 300) on each transfer captured in step (2001) and, using plaster or similar material, preparing the working model containing replicas of the prosthetic components (30, 300) already installed in the patient's mouth;
- (2004) positioning the conversion system over the replica of the prosthetic component (30, 300) and using a torque tool to rotate the sealing component (50, 600, 700, 800, 900) until the cylinder (10, 100) is fixed to the replica;
- (2005) repeating step (2004) for all existing replicas in the working model;
- (2006) applying a layer of polymerizable acrylic resin for dental use on the base, or in the hollow channel existing in the base of the existing prosthesis;
- (2007) applying a layer of polymerizable acrylic resin for dental use on the working model and around the fixation cylinders (10, 100), whose circular openings (19) are properly sealed by the sealing components (50, 600, 700, 800, 900);
- (2008) positioning the existing prosthesis on the plaster model, in a position corresponding to that used by the patient, and applying gentle pressure until the acrylic resin has solidified;
- (2009) after the acrylic resin has completely solidified, removing the prosthesis from the plaster model, including the conversion system incorporated into its base;
- (2010) sanding the base of the prosthesis to remove excess resin and make it uniform;
- (2011) attaching a fine drill bit to the inside of the pre-hole (512) of the sealing component (50, 600, 700, 800 and 900), and drilling a hole called a "chimney" in the prosthesis, from the base towards the teeth, for subsequent insertion of a fixation screw; repeating this procedure for all fixation cylinders (10, 100) incorporated into the base of the prosthesis;
- (2012) using a drill compatible with the fixation screw to be used, enlarging the diameter of the chimneys by drilling them from the teeth towards the base of the prosthesis;
- (2013) uniformizing the resin on the prosthesis base, polishing it and finishing it;
- (2014) positioning the prosthesis in the place of use and, with the aid of a torque tool, inserting the fixation screws into the chimneys and screwing them into the prosthetic components (10, 100) so that the prosthesis is fixed in the patient's mouth;
- (2015) Applying resin to close the chimneys and completing the installation.

### Brief Description of the Drawings

The present invention will be described in more detail based on a preferred example of execution and possible variants, which are additionally foreseen construction embodiments (modalities), covered by the same principles, represented in the attached figures.
Figure 1.1 shows a perspective view of the fixation cylinder according to a first embodiment of the present invention;
Figure 1.2 shows a cross-sectional view of the cylinder illustrated in Figure 1.1;
Figure 1.3 shows a front view of the cylinder in Figure 1.1;
Figure 1.4 shows a side view of the cylinder in Figure 1.1;
Figure 2.1 shows a perspective view of the fixation cylinder according to a second embodiment of the present invention;
Figure 2.2 shows a cross-sectional view of the cylinder illustrated in Figure 2.1;
Figure 2.3 shows a front view of the cylinder in Figure 2.1;
Figure 2.4 shows a side view of the cylinder in Figure 2.1;
Figure 3.1 shows a perspective view of the fixation cylinder according to a third embodiment of the present invention;
Figure 3.2 shows a cross-sectional view of the cylinder illustrated in Figure 3.1;
Figure 3.3 shows a front view of the cylinder in Figure 3.1;
Figure 3.4 shows a side view of the cylinder in Figure 3.1;
Figure 4.1 shows a perspective view of the sealing component according to a fourth embodiment of the invention presented herein;
Figure 4.2 shows a cross-sectional view of the sealing component of Figure 4.1;
Figure 4.3 shows a front view of the sealing component. illustrated in Figure 4.1;
Figure 4.4 shows a perspective view of the sealing component according to a first embodiment of the invention arranged at the center of the cylinder illustrated in Figures 1.1 to 1.4;
Figure 4.5 shows a cross-sectional view of the sealing component located in the central region of the cylinder illustrated in Figures 1.1 to 1.4;
Figure 4.6 shows a bottom perspective view of the sealing component according to a first embodiment of the invention, arranged in the center of the cylinder illustrated in Figures 1.1 to 1.4;
Figure 5.1 shows a perspective view of the sealing component according to a second embodiment of the invention presented herein;
Figure 5.2 shows a side view of the sealing component of Figure 5.1;
Figure 5.3 shows a cross-sectional view of the sealing component illustrated in Figure 5.1;
Figure 5.4 shows a cross-sectional view of the sealing component according to a second embodiment of the invention and the cylinder illustrated in Figures 2.1 to 2.4;
Figure 5.5 shows a cross-sectional view of the assembly formed by the sealing component according to a second embodiment of the invention and the cylinder illustrated in Figures 3.1 to 3.4;
Figure 6.1 shows a perspective view of the sealing component according to a third embodiment of the invention presented herein;
Figure 6.2 shows a side view of the sealing component of Figure 6.1;
Figure 6.3 shows a cross-sectional view of the sealing component illustrated in Figure 6.1;
Figure 7.1 shows a perspective view of the sealing component according to a fourth embodiment of the invention presented herein;
Figure 7.2 shows a side view of the sealing component of Figure 7.1;
Figure 7.3 shows a cross-sectional view of the sealing component illustrated in Figure 7.1;
Figure 8.1 shows a perspective view of the sealing component according to a fifth embodiment of the invention presented herein;
Figure 8.2 shows a side view of the sealing component of Figure 8.1;
Figure 8.3 shows a cross-sectional view of the sealing component illustrated in Figure 8.1;
Figure 8.4 shows a cross-sectional view of the sealing component according to a fifth embodiment of the invention disposed in the central region of the cylinder illustrated in Figures 1.1 to 1.4;
Figure 9.1 shows a perspective view of the sealing component according to a sixth embodiment of the invention presented herein;
Figure 9.2 shows a side view of the sealing component of Figure 9.1;
Figure 9.3 shows a cross-sectional view of the sealing component illustrated in Figure 9.1;
Figure 9.4 shows a cross-sectional view of the sealing component according to a sixth embodiment of the invention and the cylinder illustrated in Figures 1.1 to 1.4;
Figure 10.1 shows a perspective view of the sealing component according to a seventh embodiment of the invention presented herein;
Figure 10.2 shows a side view of the sealing component of Figure 10.1;
Figure 10.3 shows a cross-sectional view of the sealing component illustrated in Figure 10.1;
Figure 10.4 shows a cross-sectional view of the sealing component according to the seventh embodiment of the invention and the cylinder illustrated in Figures 1.1 to 1.4;
Figure 11.1 shows a perspective view of the removable to fixed prosthesis conversion system using dental implants illustrating a proposed sealing component properly arranged in a proposed fixation cylinder, according to an exemplary embodiment described herein;
Figure 11.2 shows a perspective view of the removable to fixed prosthesis conversion system using dental implants illustrating a sealing component properly arranged in a proposed fixation cylinder, according to an alternative and exemplary embodiment described;
Figure 12 shows the beginning of the flowchart of the steps of the preferred method of using the conversion system, which is the object of the present invention;
Figures 13 and 14 show the flowchart for using the conversion system, which considers the use of a mobile prosthesis that a patient already uses; and
Figures 15 and 16 show the flowchart for using the conversion system wherein the manufacture of a prosthesis in a laboratory environment is considered, that is, wherein a scenario for developing a prosthesis is considered, for example, from a digital scan or a mold protocol.
Figure 17 shows an exemplary photograph of the threads of the sealing component described above in a broken condition.
Figure 18 shows a constructive possibility of the present invention intended, more specifically, for use with distal implants, since it foresees the coupling of a distal bar to reinforce the cantilever.

### Detailed Description of the Invention

The object of the present invention will be described and explained in detail based on the attached drawings, which are merely illustrative and not limitative, since adaptations and modifications may be made without thereby departing from the scope of the claimed protection.

### - Definition of relevant concepts:

For a perfect understanding of the invention, this detailed description section begins with guidance on some important concepts:
The removable prosthesis referred to in the present invention in order to propose its conversion to a fixed format is exactly the one currently used by the patient. Obviously, in his/her first contact with the patient, the dentist makes a basic assessment of the prosthesis condition. This assessment is a routine and general assessment in patients who use removable prostheses, and it is essential that they are in good condition and that there is a balanced occlusion relationship between the arches, for example. The better the condition and the more balanced the occlusion observed, the lower the chances of encountering unwanted problems throughout the conversion process. Furthermore, in certain cases, it is possible that the patient does not have a removable total prosthesis due to various reasons, such as having only a removable partial prosthesis or other specific situations. In these circumstances, the dentist can resort to alternative resources to manufacture the prosthesis to be converted, such as using a prosthetic laboratory specialized in manufacturing prostheses or even creating a printed prosthesis, which is already feasible in the field of the invention. As can be seen in detail below, the method proposed by the present invention achieves both situations.

It is important to emphasize that, in relation to the fixed prosthesis material to which the present invention can be applied, the systems, devices and methods disclosed herein reach, at least and with ease, the most conventional forms of prosthesis presentation, that is, total prostheses made with an acrylic base, partial prostheses that also have a metal, wire or nylon structure to make them firmer in the mouth, those with teeth made of acrylic, plastic or porcelain material.

The dental implant itself comprises the screw portion that is actually screwed into the patient's bone structure and subjected to osseointegration. In practical terms, it can be said that the dental implant is the medical device that replaces the root of a lost natural tooth.

In implant systems, it is commonly observed that, above the structure of the dental implant (the one subjected to osseointegration), an intermediate prosthetic component (or abutment) is placed, which forms the interface between the implant itself and the prosthesis itself, that is, the dental crown.

The prosthesis itself, i.e. the dental crown, is arranged in a fixed manner around a structure, which is the cylinder. Said cylinder is the fixing part of the dental crown, responsible for finally eliminating the absence of a tooth. It should also be noted that, in addition to promoting the fixation of the elaborate structure of that particular tooth - for single prostheses - or set of teeth - in the case of multiple prostheses, the cylinder has its central region available to receive means for its fixation, consequently also for the fixation of the crown, to the intermediate prosthetic component. This fixation is preferably carried out through a fixation means, such as a fixation screw. This entire structure is organized so as to provide, for example, that it is possible to preserve the implant during maintenance operations on the structures that overlap it, i.e. prosthetic component, followed by cylinder, followed by crown and followed by fixation means. The introduction of this information is essential for the contextualization of implant techniques in general. Nevertheless, it should be emphasized that the present invention describes a system wherein a technique for integral replacement of multiple prostheses is applied. Given this scenario, it becomes possible to adopt a total replacement protocol, wherein only a few implants are installed, and it is still possible to provide the result of a fixed entire arch.

### - System of converting removable dental prosthesis into fixed dental prosthesis:

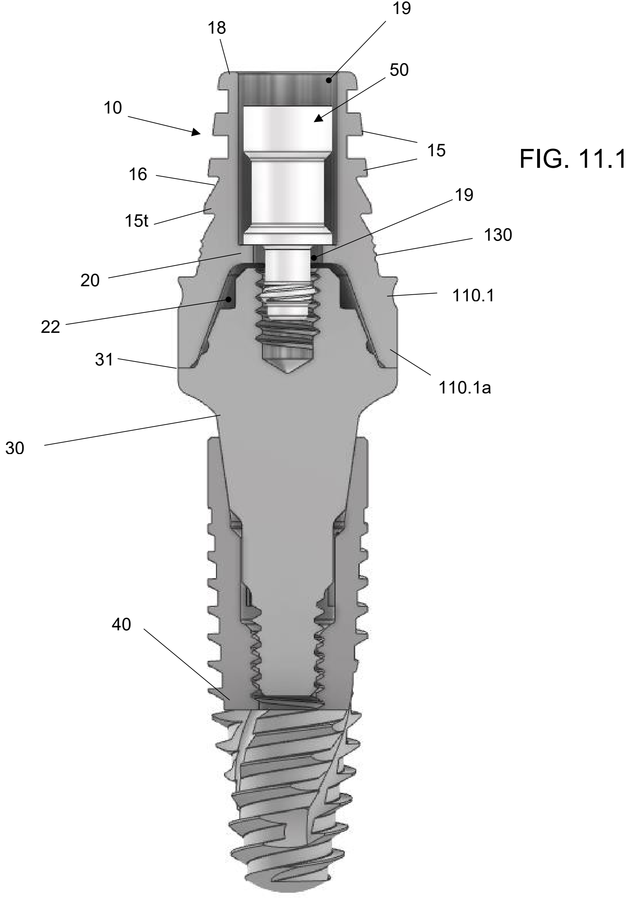

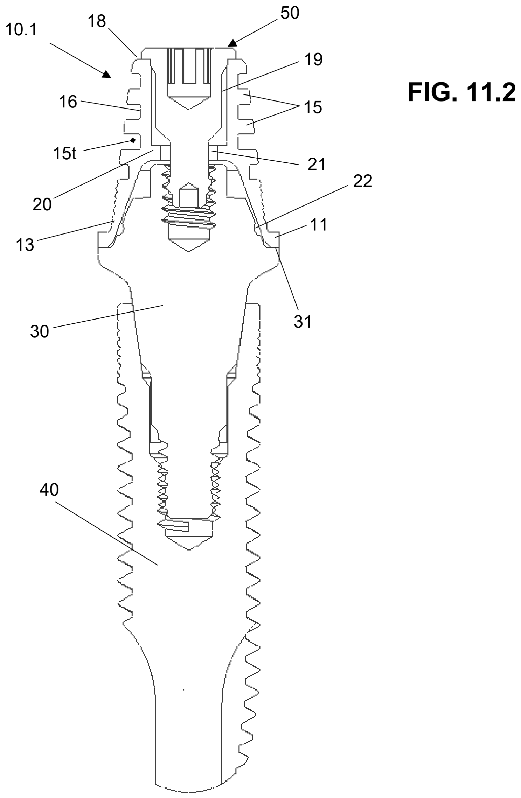

The object of the present invention, illustrated in exemplary embodiments in Figures 11.1 to 11.2, is a system that allows converting a removable prosthesis into a fixed one and that comprises at least one fixation cylinder 10 associated with a sealing component 50, arranged on a prosthetic component 30 of a dental implant 40.

At the system level, it is understood that at least two dental implants 40 are suitably arranged on the mandible or maxilla of a patient, positioned in a region corresponding to the drilling performed in a previously mobile prosthesis. Such dental implants 40 receive the arrangement of an intermediate prosthetic component 30. On said prosthetic component 30 is arranged the cylinder 10, which temporarily receives a sealing component 50 in the steps of the conversion method that involve the use of resin or other conforming and/or adhesive material. Subsequently, the sealing component is removed together with the cylinder by means of the action of removing the prosthesis itself with the cured resin, dismissing with the use of tools in an intraoral environment that expose the patient to the risk of losing small components, and is then replaced by an implant fixation screw.

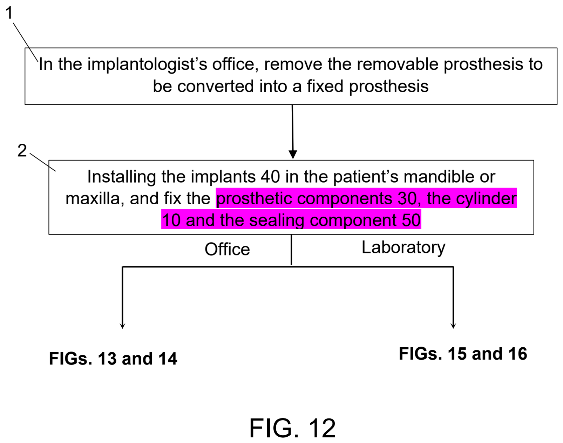

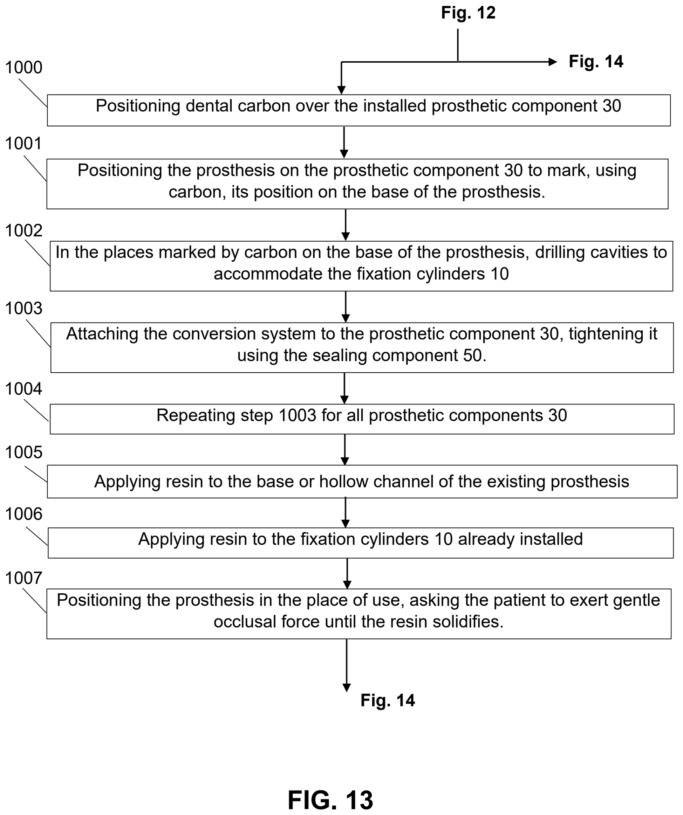

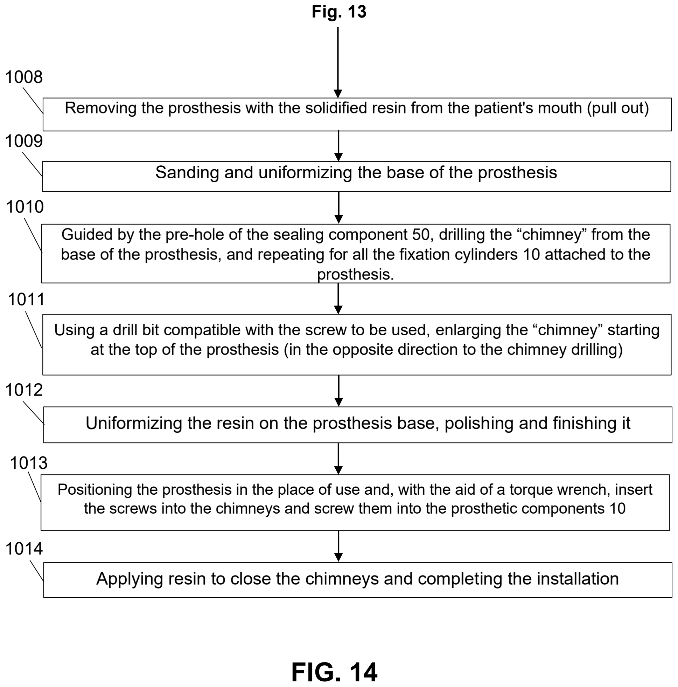

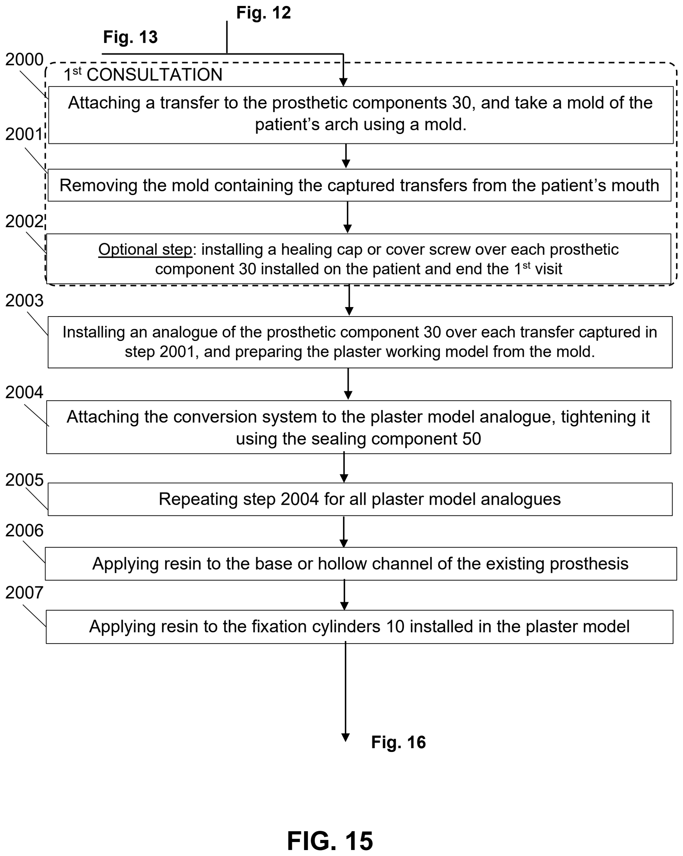

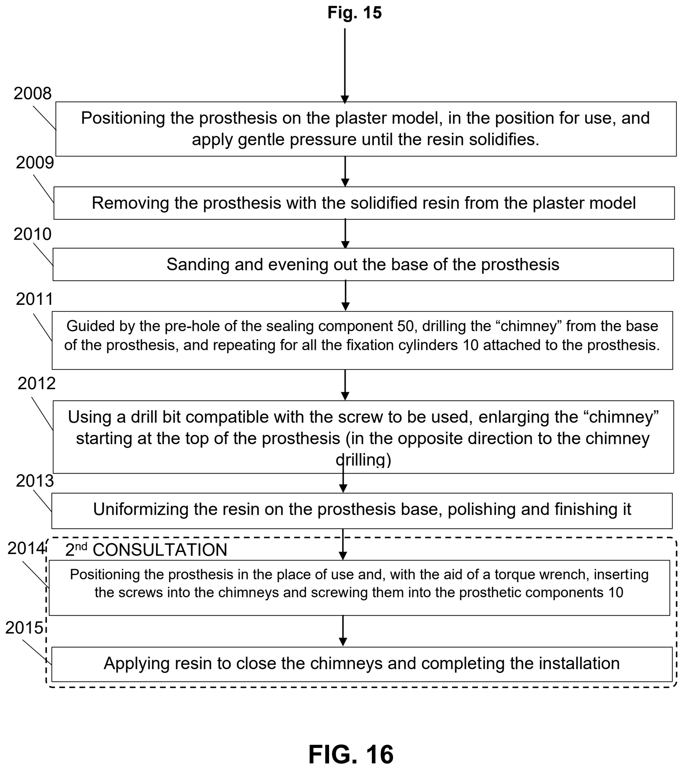

In particular, the technique of the invention will be described further below by means of a detailed description directed to the method of converting a mobile prosthesis into a fixed one. For this purpose, particular reference may be made to Figures 12 to 16.

Preferably, the intermediate prosthetic components 30 referenced in the present invention are of the mini-pillar type.

It is desirable that, associated with the system itself, a set of tools with an interface compatible with the implant 40, the prosthetic component 30, the sealing element 10 and the implant fixation screw selected for use be considered. The tools are those that are usually applied to an implant technique, i.e. for promoting rotational movements, drilling, controlled application of torque, etc. In particular, at least one installation wrench with torque control is required.

Furthermore, it is important to note that the present invention describes a wide range of formats and dimensions, precisely so that it is possible to achieve the possibility of converting the prosthesis to any anatomy that the patient presents. For example, it is possible to choose the height of the fixation cylinder that one wishes to use, from the embodiments described herein.

Additionally, the arrangement of a resin should be considered in association with the system. In practice, the primary fixation of the cylinder 10 on the prosthetic component 30 is achieved by means of the controlled torque applied to the sealing component 50. Subsequently, the resin is applied around the fixation cylinder 10 and also on the base of the prosthesis to be converted, which is necessary to incorporate the fixation cylinder into the base of the prosthesis. When removing the prosthesis from the patient's mouth, once the resin has cured, the sealing component 50 is completely extracted together with the cylinder 10. Its function is to protect the system from the unwanted entry of resin. Then, the prosthesis is finally prepared so that its final fixation can then occur by means of a fixation screw indexed in the chimney of the cylinder 10 (which is adhered to the base of the prosthesis) on the prosthetic component 30 in its condition attached to the implant. The details of this method will be presented later in this specification.

### - Fixation cylinder:

As presented above, the aforementioned fixation cylinder is the fixing part of a dental crown. In the present invention, in particular, solutions aimed at achieving the transformation of a fully removable prosthesis into a fully fixed one are described. Thus, in the present invention the fixation cylinder should be understood as a favorable means for the adhesion of resin, interfacing the fixing capacity of the prosthesis from its base, that is, the portion corresponding to the inner region of the gum, to the implants applied to the patient.

The fixation cylinder as presented below in its exemplary (non-limiting) embodiments is arranged immediately after the intermediate prosthetic component (abutment), so that the base of the cylinder (understood as the one with the largest diameter) is compatible in shape with the upper end of the intermediate prosthetic component (understood as the end opposite to the insertion end of the implant).

Regarding the manufacturing material, it is understood that medical material, such as titanium or brass, is preferably used.

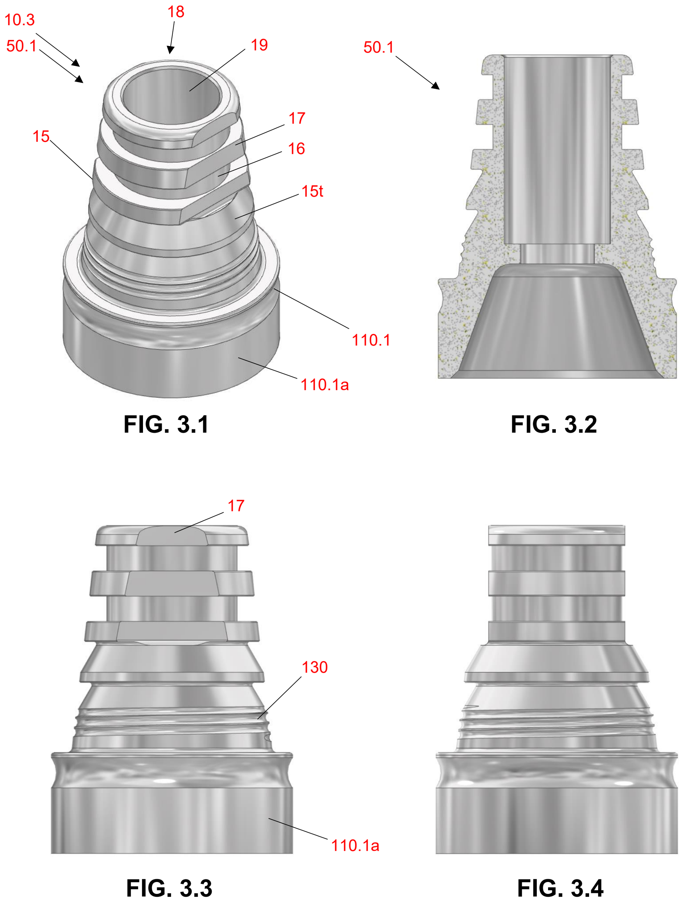

### First embodiment provided: (Figs 3.1 to 3.4)

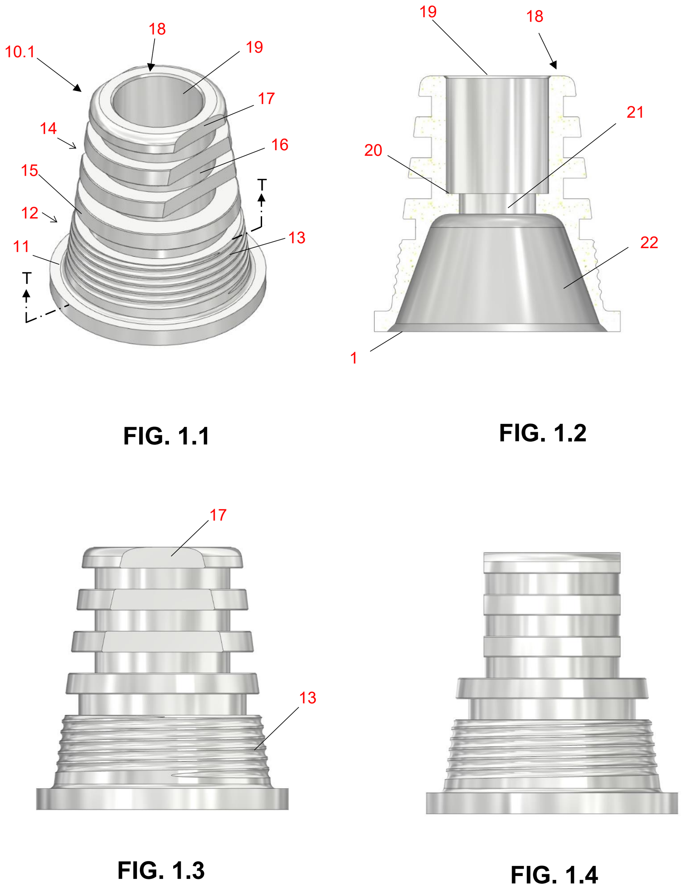

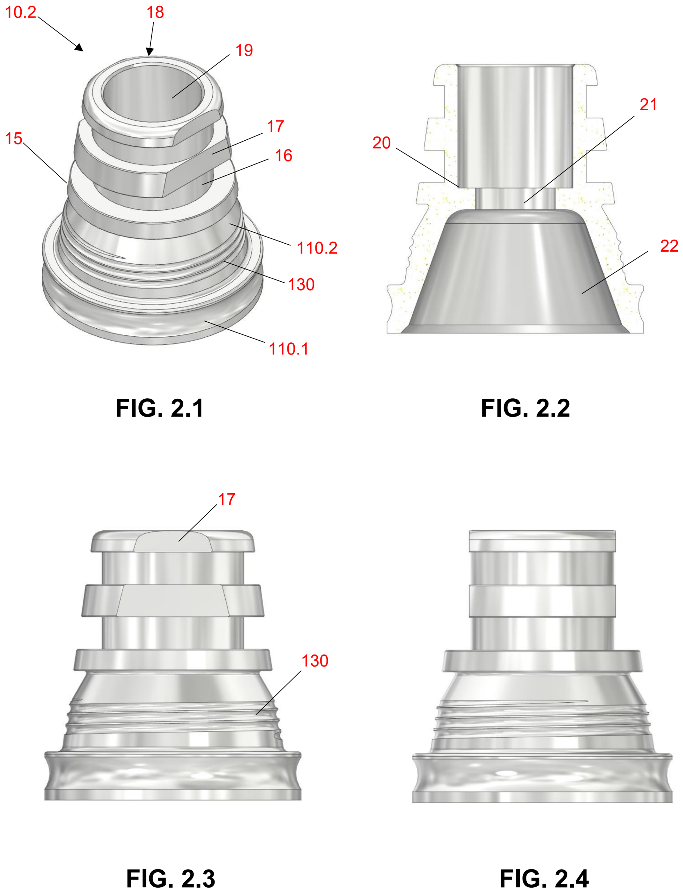

As can be seen in Figures 1.1 to 1.4, a first embodiment of the cylinder 10.1 has a body in the frustoconical shape, defined by an annular base 11 with an external diameter equivalent to the diameter of the flat platform 31 of the prosthetic component 30 on which it will rest. The body of the fixation cylinder 10.1 has two contiguous regions, best seen in Figures 2.2 to 2.4: a lower region 12 with a frustoconical profile and provided with a toroidal contour rib 13, and an upper region 14 consisting of frustoconical platforms 15 arranged parallel to each other and with progressively smaller external diameters in the upward direction, said frustoconical platforms 15 being joined together by cylindrical recesses 16 and provided, on one or both sides, with vertical cutouts 17 that can reach two or more platforms 15 to provide the cylinder 10 with anti-rotational properties. Figures 1.1 and 1.3 clearly show the vertical cutouts 17. It should be noted that several lateral cavities formed between the platforms 15 and the recesses 16 increase the contact and adhesion area of the resin that will be used to fix the cylinder 10 to the base of the removable prosthesis to be converted into a fixed one.

Taking Figure 1.2 as a basis, section A-A allows us to see that the top surface 18 of the cylinder 10.1 is flat and provided with a central circular opening 19 that gives access to an internal compartment with a cylindrical shape until reaching a perimeter platform 20, which is provided with an internal mid hole 21 with a smaller diameter than that of the circular opening 19, but still sufficient to allow the passage of the sealing component and the fixation screw. One of the objectives of the perimeter platform 20 is to configure a depth limiting stop for the sealing component that will be used in the primary fixation of the prosthesis in the prosthetic component 50 (during the steps involving resin), and/or for the screw (applicable after the completion of the steps involving resin). Below the perimeter platform 20 there is a second internal compartment 22 with dimensions equivalent to those of the upper portion of the prosthetic component 30. When the prosthesis is fixed to the upper region of the intermediate prosthetic component 30, said second internal compartment 22 entirely contains within it the upper region of the intermediate prosthetic component 30.

The function of the cylinder 10 therefore involves being the element wherein the prosthesis is arranged and which will interface with the prosthetic component 30 during the conversion procedure and, subsequently, in the fixation of the prosthesis itself.

It is worth noting, for a complete understanding of the invention, that in order for the fixation cylinder to be properly integrated into the base of the existing prosthesis (the one to be converted), it is necessary to use a capture that uses fast-curing resin. In practice, resin is applied around the fixation cylinder coupled to the sealing component, preferably already in the patient's mouth, and, simultaneously, to the base of the prosthesis. The prosthesis must then be positioned at the site of use, being subjected to occlusion by the patient, so that the layers of resin are pressed against each other in order to be unified by means of the applied force. This procedure causes the resin to be definitively adhered to the base of the prosthesis at the end of the curing time and, in addition, the fixation cylinder 10 together with the sealing component are also solidly attached to the resin and, consequently, to the base of the prosthesis.

After all the elements have been adhered, the prosthesis with the cylinder and the sealing component at its base is extracted from the patient's mouth (pullout procedure), and then the sealing component is removed from the fixation cylinder. Further details about these steps will be provided throughout this specification, in due course.

In compliance with the proposal of the present invention, once the sealing component removal step has been completed - which occurs outside the intraoral environment - the fixation cylinder 10 remains with the central circular opening 19 free to allow the insertion of the implant fixation screw which, finally, will secure the prosthesis in the prosthetic component 30 in a fixed manner.

### Second embodiment provided (Fiqs 2.1 to 2.4):

Figures 2.1 to 2.4 show the cylinder 10.2, which is provided in a second embodiment, wherein it has a body in the frustoconical shape, defined by an annular and convex region 110.1, the closure of the external diameter of which coincides with the diameter of the flat platform 31 of the prosthetic component 30 on which it will rest. In an upward direction, after the annular and convex region 110.1, a toroidal contour rib 130 is arranged, promoting a reduction in diameter in relation to the region 110.1 itself. Sequentially, still in an upward direction, another reduction in diameter 110.2 precedes the arrangement of a set of frustoconical platforms 15 joined together by cylindrical recesses 16, wherein said set preferably comprises three platforms 15 interspersed by two recesses 16 in order to complete the reduction in diameter to its minimum. The minimum diameter observed is the one closest to the diameter of the sealing component 50, such that an effective seal can be achieved.

One or more of the three platforms 15 may be provided on one or both sides with vertical cutouts 17 that may reach two or more platforms 15 to provide the cylinder 10 with anti-rotational properties. Figures 2.1 and 2.3 allow the vertical cutouts 17 to be clearly seen. It should be noted that several lateral cavities formed between the platforms 15 and the recesses 16 increase the contact and adhesion area of the resin that will be used to fix the cylinder 10 to the base of the removable prosthesis to be converted into a fixed one.

As in the first embodiment described above, the cylinder 10 has a flat top surface 18 and is provided with a central circular opening 19 that gives access to an internal compartment having a cylindrical shape until reaching a perimeter platform 20, which is provided with an internal mid hole 21 with a smaller diameter than that of the circular opening 19, but still sufficient to allow the passage of the sealing component. One of the purposes of the perimeter platform 20 is to configure a depth limiting stop for the sealing component 50 that will be used to fix the prosthesis to the prosthetic component 30. Below the perimeter platform 20 there is a second internal compartment 22 with dimensions equivalent to those of the upper portion of the prosthetic component 30. When the prosthesis is fixed to the upper region of the prosthetic component 30, said second internal compartment 22 entirely contains within it the upper region of the prosthetic component 30.

### Third embodiment provided (Figs 3.1 to 3.4):

As previously mentioned, it is one of the objectives of the present invention that all the technical features described herein be applicable to different patient anatomies. In this sense, for example, to serve patients who have higher gingival tissue, a higher embodiment is additionally provided for the cylinder 10.3. The cylinder 10.3 is provided in a third embodiment, wherein it presents a body in the frustoconical shape, defined by an annular support region 110.1a for a convex annular region 110.1, the closure of the external diameter of which of these two elements together coincides with the diameter of the flat platform 31 of the prosthetic component 30 on which it will rest. In an upward direction, after the annular and convex region 110.1, a toroidal contour rib 130 is arranged, promoting a reduction in diameter in relation to the region 110.1 itself. Sequentially, still in an upward direction, another reduction in diameter precedes the arrangement of a set of frustoconical platforms 15 joined together by cylindrical recesses 16, wherein said set preferably comprises three platforms 15 interspersed by two recesses 16 so as to complete the reduction in diameter to its minimum. In this embodiment, in particular, the beginning of the set of frustoconical platforms 15 and cylindrical recesses 16 is established by a first platform 15.a with a ridged shape. The minimum diameter observed is the one closest to the diameter of the sealing component 50.

One or more of the three platforms 15 may be provided on one or more sides with vertical cutouts 17 that may reach two or more platforms 15 to provide the cylinder 10 with anti-rotational properties. Figures 2.1 and 2.3 allow the vertical cutouts 17 to be clearly seen. It should be noted that several lateral cavities formed between the platforms 15 and the recesses 16 increase the contact and adhesion area of the resin that will be used to fix the cylinder 10 to the base of the removable prosthesis to be converted into a fixed one.

As in the first and second embodiments described above, the cylinder 10.3 has a flat top surface 18 and is provided with a central circular opening 19 that gives access to an internal compartment having a cylindrical shape until reaching a perimeter platform 20, which is provided with an internal mid hole 21 with a smaller diameter than that of the circular opening 19, but still sufficient to allow the passage of the sealing component. One of the objectives of the perimeter platform 20 is to configure a depth limiting stop for the sealing component 50 that will be used in fixing the prosthesis to the prosthetic component 30. Below the perimeter platform 20 there is a second internal compartment 22 with dimensions equivalent to those of the upper portion of the prosthetic component 30. When the prosthesis is fixed to the upper region of the prosthetic component 30, said second internal compartment 22 entirely contains within it the upper region of the prosthetic component 30.

It should be noted that the dimensions and component elements of this embodiment result in a cylinder with vertical dimensions greater than those presented in the present invention. The function is precisely to achieve higher gum anatomies, and thus to be able to offer, using the same conversion technique, solutions based on the same principle.

### - Sealing component:

According to the information set out above, the sealing component 50 as described in the invention is used in the steps of the conversion method that involve the use of resin or other conforming and/or adhesive material. In particular, it should be noted that: in a first visit to a dental office, for example, the patient undergoes the placement of at least two dental implants, wherein said implants receive the arrangement of two intermediate prosthetic components (abutments), which are finished with a suturing procedure. Once the suturing is completed, said intermediate components can now receive the arrangement of the cylinders, to their upper portion. Variations of this procedure can be applied, for example: the transfer of the cylinder can occur before the suturing, the carbon marking process can occur directly on the intermediate component, or on the cylinder already with the sealing component. It is important to emphasize that the preferred forms will be depicted herein, but these variations will still be included within the same inventive concept.

In order to establish contact between this assembly made of a dental implant, followed by an intermediate prosthetic component and followed by a cylinder, the sealing component 50 passes through the central region through the passage that is available vertically in the entire union of the assembly.

Even more particularly, it should be noted that the invention comprises embodiments wherein the sealing component 50 is positioned on the intermediate component already comprising its prior arrangement on the cylinder. However, the present invention also encompasses embodiments wherein the cylinder is first positioned on the intermediate component in the intraoral environment, while the sealing component 50 is subsequently installed in the central region of the assembly. The selection regarding which embodiment to use is made by the dentist himself/herself. In this way, the arrangement of the sealing component marks the point at which the conversion of the prosthesis can already effectively begin. Particularly with regard to the sealing component, with the present invention, this element is extracted together with the cylinder exactly during the pullout procedure of the prosthesis with the cured resin. The occlusion force of the patient, during the curing time of the resin, causes the cylinder with the sealing component to be fixed to the base of the prosthesis, in the region corresponding to the gum. When the prosthesis is removed after recognition of curing, the cylinders with their sealing components are located in the prosthesis and can be accessed by the dentist, who, through a sequence of drills, removes the fixing components and then replaces their positioning with fixation screws when returning the prosthesis to the patient's mouth.

Therefore, it should be noted that the sealing component is removed by means of the prosthesis removal action itself with the cured resin, eliminating the need to use tools that expose the patient to the risk of losing small components, and is then replaced by an implant fixation screw.

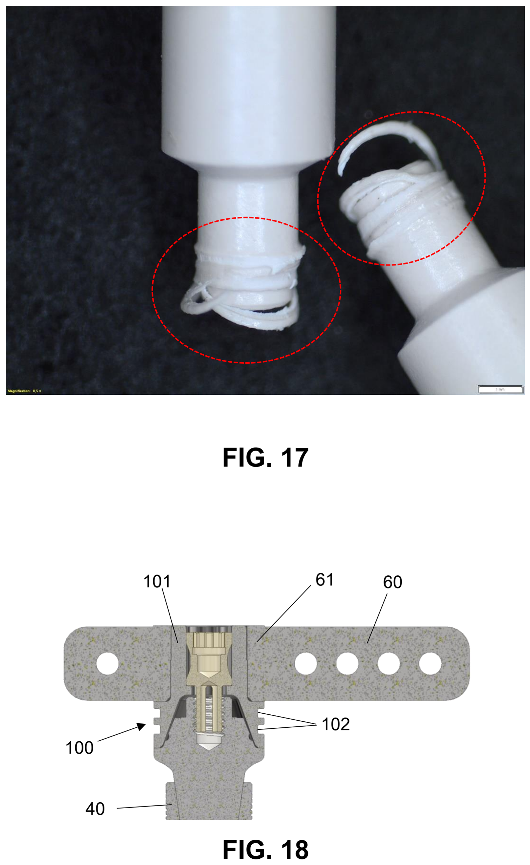

Furthermore, for a perfect understanding of the invention, it can be observed that the sealing component is preferably manufactured in a material that presents the characteristic of flexibility, such as, for example, a polymer. It turns out that in the placement of the sealing component immediately after the implant is performed, the sealing component receives a controlled torque by means of which it attaches the cylinder to the intermediate component and to the implant itself. Thus, it is observed that a thread guarantees this grip. Because it is presented in a flexible material, at the step wherein the cylinder is subjected to contact with the resin and with the also resin-coated prosthesis, after the curing of such resin both the cylinder and the sealing component are adhered to the prosthesis. In this sense, the pullout movement performed by the dentist on the prosthesis in the patient's mouth causes the rupture of the threads (flexible material) that were previously capable of providing fixation to the intermediate component. Figure 17 presents an exemplary photograph of the threads of the sealing component described herein in a ruptured condition.

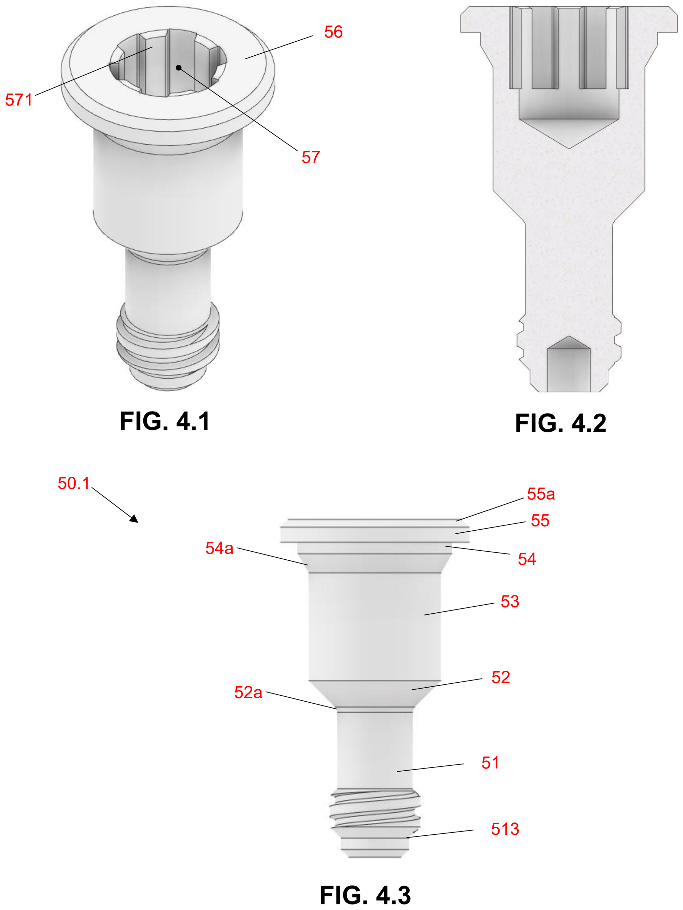

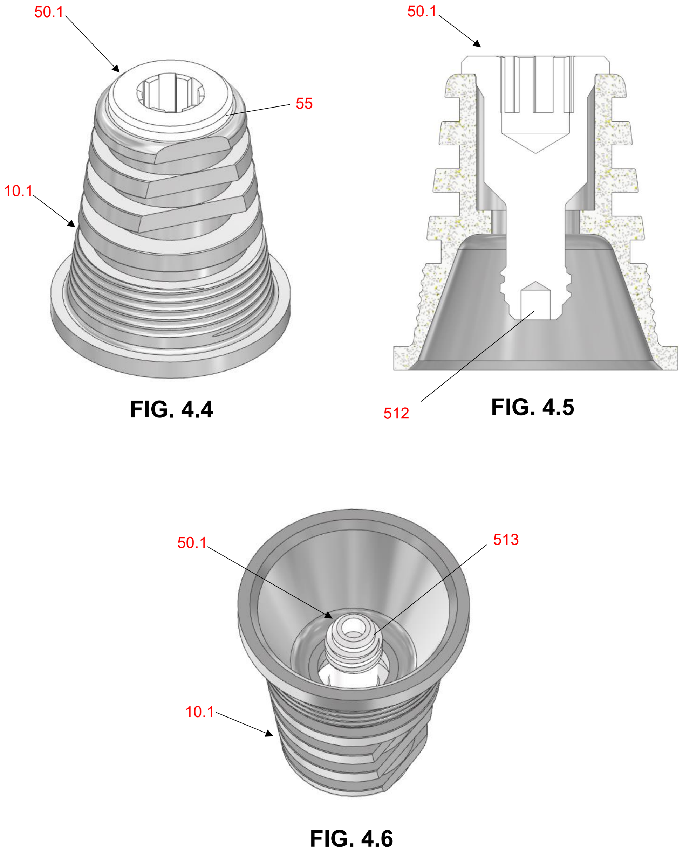

### First embodiment provided (Figs 4.1 to 4.6):

As illustrated in Figures 4.1 to 4.6, a sealing component 50.1 is described as a first embodiment provided of the present invention. The sealing component 50 has a substantially cylindrical shape, being defined by a cylindrical lower rod 51, a conical mid region 52 to promote gradual diametrical increase to the part from a transition band 52a, and a body 53 also cylindrical that is enclosed, at the top,, in a conical band 54 of contact with the internal wall structure of the cylinder, from a transition region 54a, on which there is another cylindrical section 55 of diameter greater than that of the circular opening 19 of the fixation cylinder 10, providing firm coupling and sealing between the parts, with the cylindrical section 55 preceding a ridged upper band 55a, and limiting the insertion depth of the component 50.1 inside the fixation cylinder 10. At the center of the top surface 56 of the component 50 there is a circular hole 57 for insertion of a tool (for example, a torque wrench) to assist in the transport and/or clamping of the part. Therefore, when proceeding with the insertion of the sealing component 50 into the fixation cylinder 10, the result of the interaction between these elements is that the cylindrical section 55 of the sealing component 50.1 is firmly supported on the upper end of the fixation cylinder 10. Visually, once the positioning of the sealing component 50 has been completed in the fixation cylinder 10, it can be observed that the upper end of the sealing component 50 is positioned above the cylinder 10, supported therein by the cylindrical section 55.

Optionally, as shown in the first embodiment illustrated in Figures 3.1 and 3.3, the upper part of the inner circular wall of the hole 57 may be provided with equidistant protrusions 571 or other similar elements capable of assisting in the fixing of the transport/fixing tool, without thereby departing from the scope of the protection claimed herein.

The rod 51 may be internally provided, from the lower edge, with a pre-hole 512 functioning as a guide for a drill that drills the sealing component together with the prosthesis to allow the passage of a fixation screw fixing it in the prosthetic component.

On the outer surface of the rod 51, near its lower end, a toroidal contour rib 513 is located which helps to correctly position the component 50.1 in the fixation cylinder.

### Second embodiment provided (Fiqs 5.1 to 5.5):

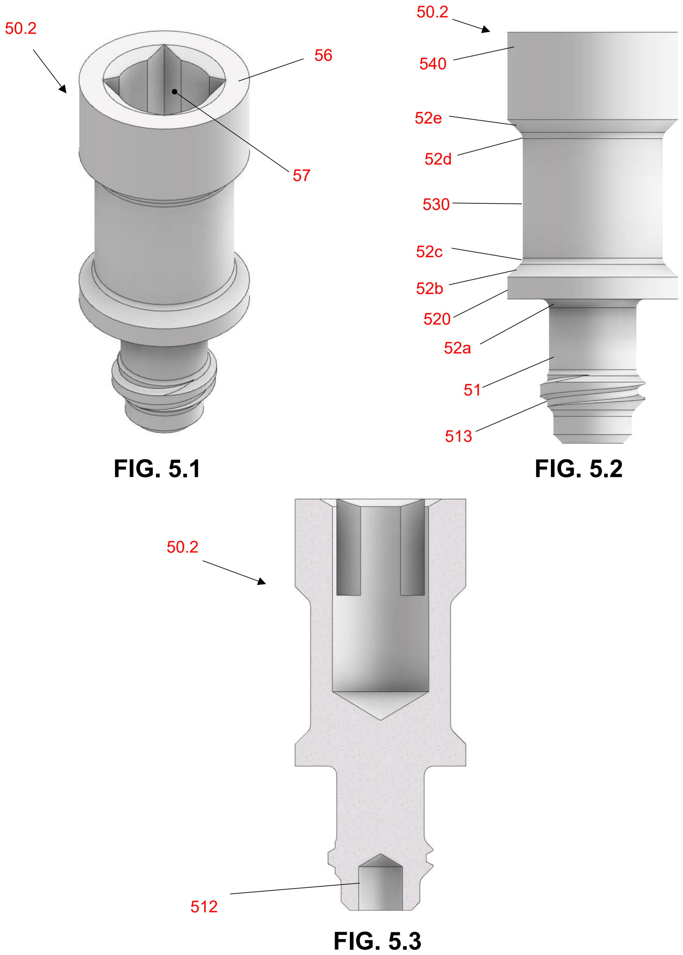

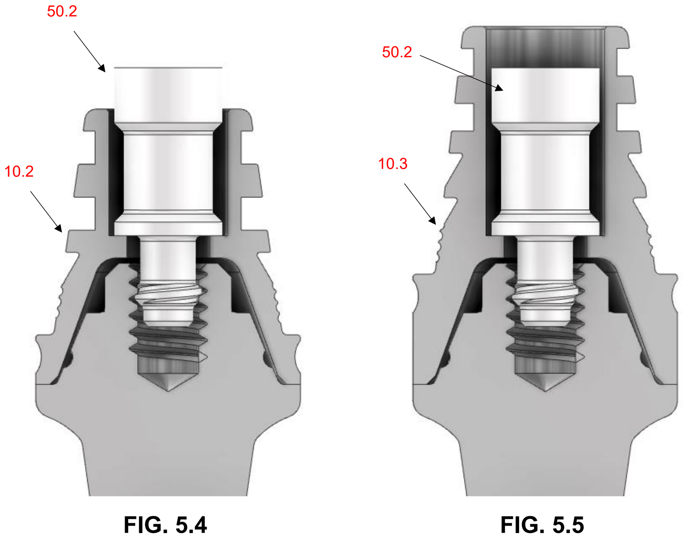

A second embodiment provided for the sealing component 50.2 of the invention is illustrated in Figures 5.1 to 5.5. The sealing component 50.2 has a substantially cylindrical shape, being defined by a cylindrical lower rod 51, a transition region 52a ridged to promote a transition to a diametrical increase that precedes a short cylindrical band 520 of the part. Above the short cylindrical band 520, a first intermediate conical region 52b is followed by a second intermediate ridged region 52c. Immediately following the second intermediate ridged region 52c, a central cylindrical body 530 is shaped so that its diameter is observed as greater than that of the lower cylindrical rod 51 and lower than that of an upper cylinder 540. Said central cylindrical body 540 meets the upper cylinder 530 through an intermediate ridged region 52d followed by an intermediate conical region 52e. At the center of the top surface 56 of the component 50.2 there is a square-patterned hole 57 for inserting a tool (e.g., a wrench) to aid in transporting and/or fixing the part. It should be emphasized that other connections would still be viable, such as, for example, a hexagonal connection.

The rod 51 can be internally provided, from its lower edge, with a pre-hole 512 which is subsequently used as a guide for the drill to drill the sealing component itself together with the prosthesis.

On the outer surface of the rod 51, close to its lower end, there is a toroidal contour rib 513 which assists in the correct positioning of the component 50.2 in the fixation cylinder 10.

This same second embodiment of sealing component 500 can be applied in conjunction with the third embodiment of the cylinder 10.3, for example, the one described to serve patients who have higher gingival tissue. In this particular application, when the sealing component 50.2 is inserted into the fixation cylinder 10, the result of the interaction between these elements is that the edge 56 of the sealing component 500 is located below the upper end of the fixation cylinder 10. Visually, once the positioning of the sealing component 500 has been completed in the fixation cylinder 10, it can be observed that the upper end of the sealing component 500 becomes perfectly fitted within the height of the cylinder 10.

### Third embodiment provided (Fiqs. 6.1 to 6.3):

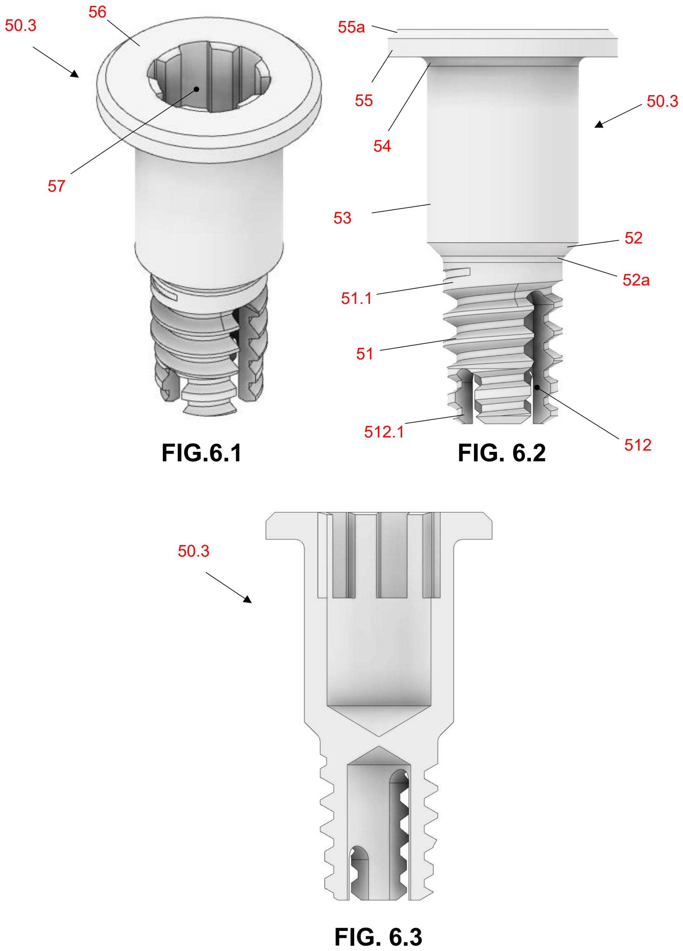

Figures 6.1 to 6.3 show a third embodiment for the sealing component 50.3. In this case, the sealing component 50.3 comprises a pre-hole 512 of the rod 51 presenting an extended form, so that the wall of said rod 51 has vertically arranged slits capable of promoting a certain resilience, in order to facilitate the decoupling of the intermediate prosthetic component 30 during the capture step of the cylinder 10. It is envisaged that the rod 51 is provided with different vertically arranged slits, for example, a 180° slit with the same length, or slits every 90°, with a long slit and a short slit interspersed.

Immediately after the pre-hole 512, a cylindrical band provided with a threadable means 51.1 is arranged, representing the last thread turn of the rod 51 which is fully threaded. The pre-hole 512 is the means by which a correct and firm positioning of the sealing component 50.3 in the cylinder can be provided. Continuing upwards, a transition band 52a precedes a conical mid region 52 to promote a gradual diametrical increase to the part, reaching a cylindrical body 53 that is enclosed, at the top, in a conical band 54. Above the conical band 54, a second cylindrical section 55 is arranged with a diameter greater than that of the circular opening 19 of the fixation cylinder 10. Finally, above the cylindrical section 55, a ridged upper band 55a encloses the sealing component 50.3, determining a top surface 56. At the center of the top surface 56 of the component 50.3 there is a hole 57 for inserting a tool (for example, a wrench) to aid in the transport and/or clamping of the part. It should be emphasized that other connections would still be viable in addition to the illustrated hexagonal connection, such as, for example, a square connection or other desirable connection.

In this configuration, physical contact between the sealing component 50.3 and the cylinder 10 occurs when the lower surface of the rim 55 abuts the top surface 18 of the cylinder.

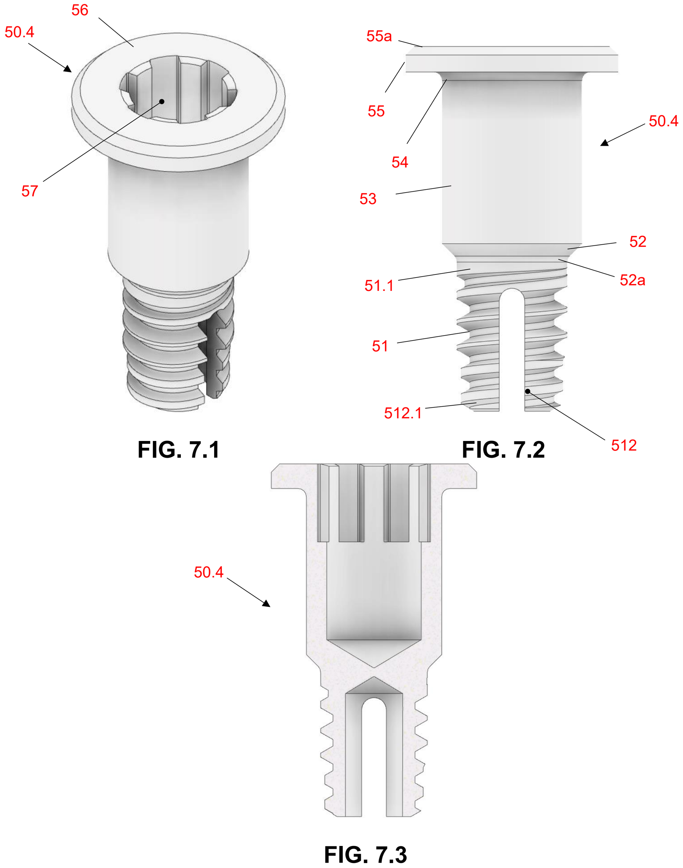

### Fourth embodiment provided (Figs. 7.1 to 7.2)

Figures 7.1 to 7.3 show a fourth embodiment for the sealing component 50.4. In this case, the sealing component 50.4 comprises a pre-hole 512 of the rod 51 presenting an extended form, so that the wall of said rod 51 has vertically arranged slits capable of promoting a certain resilience, in order to facilitate the decoupling of the intermediate prosthetic component 30 during the capture step of the cylinder 10. It is envisaged that the rod 51 is provided with longitudinal slits of the same extension, for example, two aligned slits of the same height, or, optionally, different heights.

It can be seen that the rod 51 is fully threaded, so that a cylindrical band 51.1 is arranged in the uppermost portion of the rod 51, not being reached by the slits 512.1. This entire structure helps to provide a correct and firm positioning of the sealing component 50.4 in the cylinder. Continuing upwards, a transition band 52a precedes a conical mid region 52 to promote a gradual diametrical increase to the part, reaching a cylindrical body 53 that is enclosed, at the top, in a conical band 54. Above the conical band 54, a second cylindrical section 55 is arranged with a diameter greater than that of the circular opening 19 of the fixation cylinder 10. Finally, above the cylindrical section 55, a ridged upper band 55a encloses the sealing component 50.3, determining a top surface 56. At the center of the top surface 56 of the component 50.3 there is a hole 57 for inserting a tool (for example, a wrench) to aid in the transport and/or clamping of the part. It should be emphasized that other connections would still be viable in addition to the illustrated hexagonal connection, such as, for example, a square connection or other desirable connection.

In this configuration, physical contact between sealing component 50.4 and cylinder 10 occurs when the lower surface of rim 55 abuts the top surface 18 of the cylinder.

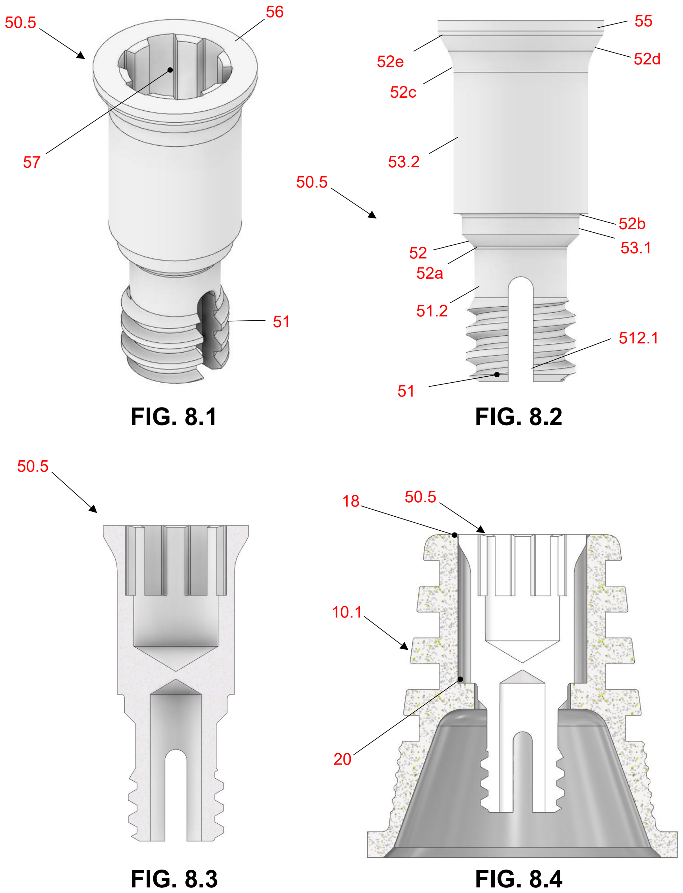

### Fifth embodiment provided (Figs. 8.1 to 8.4):

A fifth possible embodiment for the sealing component 50.5 is shown in Figures 8.1 to 8.3. In this case, the sealing component 50.5 comprises a pre-hole 512 of the rod 51 presenting an extended form, so that the wall of said rod 51 has vertically arranged slits 512.1 capable of promoting a certain resilience, in order to facilitate the decoupling of the intermediate prosthetic component 30 during the capture step of the cylinder 10. It is envisaged that the rod 51 is provided with longitudinal slits 512.1 of the same length, for example, two aligned slits of the same height, or, optionally, different heights. In this embodiment, the rod 51 is almost entirely threaded, except for a narrow strip 51.2 in its upper region, opposite the pre-hole 512.

Above the rod 51, a transition band 52a precedes a conical region 52 to promote a gradual diametrical increase to the part, reaching a first cylindrical body 53.1. Then, a new transition band 52b promotes a diametrical increase to the part, but, at this point, it is not an increase considered gradual, but rather an increase that creates a significant sudden change in diameter, so as to create a kind of stop, and determining the beginning of a second and main cylindrical body 53.2.

The aforementioned second and main cylindrical body 53.2 extends vertically until it meets an angled cylindrical band 52c, followed by a ridged band 52d and a narrow upper angled band 52e which, together, promote a gradual increase in diameter until a final cylindrical section 55 is reached, with a diameter compatible with that of the circular opening 19 of the fixation cylinder 10. The upper part of the final cylindrical section 55 forms the top surface 56. At the center of the top surface 56 of the component 50.5 there is a hole 57 for inserting a tool (for example, a wrench) to aid in the transport and/or clamping of the part. It should be emphasized that other connections would still be viable in addition to the illustrated hexagonal connection, such as, for example, a square connection or other desirable connection.

It can be seen that in this embodiment the upper surface 56 of the sealing component 50.5 is designed to be aligned with the top surface 18 of the fixation cylinder 10. Furthermore, in this embodiment, the mid region of the sealing component, precisely at the height of the beginning of the second and main cylindrical body 53.2, is not conical, but defined by a right angle that creates a lower perimeter surface that rests on the top of the perimeter platform 20 of the fixation cylinder 10.

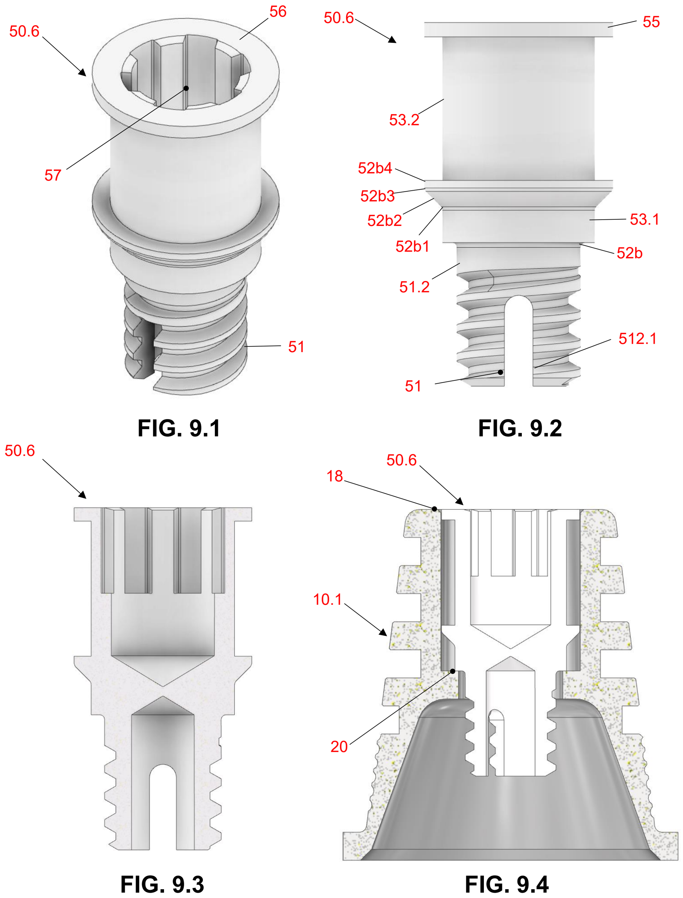

### Sixth embodiment provided (Figs. 9.1 to 9.4):

Figures 9.1 to 9.4 show a sixth embodiment for the sealing component 50.7. In this case, the sealing component 50.7 comprises a pre-hole 512 of the rod 51 presenting an extended form, so that the wall of said rod 51 has vertically arranged slits 512.1 capable of promoting a certain resilience, in order to facilitate the decoupling of the intermediate prosthetic component 30 during the capture step of the cylinder 10. It is envisaged that the rod 51 is provided with longitudinal slits 512.1 of the same length, for example, two aligned slits of the same height, or, optionally, different heights. In this embodiment, the rod 51 is almost entirely threaded, except for a narrow strip 51.2 in its upper region, opposite the pre-hole 512.

Above the rod 51, a transition band 52b promotes a diametrical increase to the part, which creates a significant sudden change in diameter, so as to create a kind of stop, and determines the beginning of a lower cylindrical body 53.1.

Above the lower cylindrical body 53.1, in an upward direction, a short angled band 52b1 is followed by a larger ridged band 52b2, which in turn is followed by a short ridged band 52b3 preceding a cylindrical band 52b4. Directly above the cylindrical band 52b4, a main cylindrical body 53.2 extends vertically. An abrupt change in diameter is observed, whereby it is seen that the diameter of the main cylindrical body 53.2 is noticeably smaller than the diameter of the cylindrical band 52b4. The main cylindrical body 53.2 continues until it meets a final cylindrical section 55, of diameter identical to the diameter of the cylindrical band 52b4. The upper part of the final cylindrical section 55 forms the top surface 56. At the center of the top surface 56 of the component 50.5 there is a hole 57 for inserting a tool (e.g., a wrench) to aid in transporting and/or securing the part. It should be noted that other connections would still be viable in addition to the illustrated hexagonal connection, such as, for example, a square connection or other desirable connection.

It can be seen that in this embodiment the upper surface 56 of the sealing component 50.5 is designed to be aligned with the top surface 18 of the fixation cylinder 10. Furthermore, in this embodiment the mid region of the sealing component, precisely at the height of the beginning of the lower cylindrical body 53.1, is not conical, but defined by a right angle that creates a lower perimeter surface that rests on the top of the perimeter platform 20 of the fixation cylinder 10.

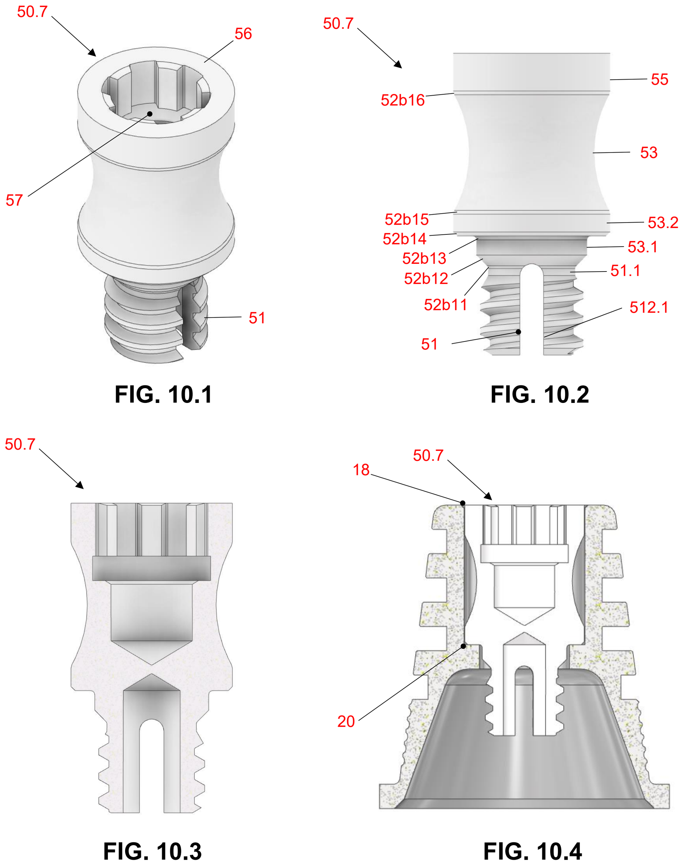

### Seventh embodiment provided (Figs. 10.1 to 10.4):

Figures 10.1 to 10.4 show a seventh embodiment for the sealing component 50.7. In this case, the sealing component 50.7 comprises a pre-hole 512 of the rod 51 presenting an extended form, so that the wall of said rod 51 has vertically arranged slits 512.1 capable of promoting a certain resilience, in order to facilitate the decoupling of the intermediate prosthetic component 30 during the capture step of the cylinder 10. It is foreseen that the rod 51 is provided with longitudinal slits 512.1 of the same extension, for example, two aligned slits of the same height, or, optionally, different heights. In this embodiment, the rod 51 is almost entirely threaded, except for a narrow strip 51.1 in its upper region, opposite the pre-hole 512. Said narrow strip 51.1 is followed by a narrow ridged band 52b11 and a wide ridged band 52b12 which promote a progressive increase in diameter up to a first lower cylinder 53.1 which, consequently, has a larger diameter than that observed in the rod 51. Said first lower cylinder 53.1 is followed by an angled band 52b13 and a ridged band 52b14, arriving at a second cylinder 53.2. The change in diameter between that observed in the ridged band 52b14 and that of the second cylinder 53.2 is considerable, so that a wide contact region is found in the lower part of the ridged band 52b14.

In relation to the longitudinal slits 512.1, it can be seen that they reach up to part of the transition band 52b12.

Above the second cylinder 53.2, a ridged band 52b15 precedes a third and main cylinder 53. In this seventh embodiment, said cylinder 53 has a gently concave geometry to facilitate handling. Above said third and main cylinder 53, a ridged band 52b16 is arranged, preceding a final cylindrical section 55, which has the same diameter as the second cylinder 53.2.

The upper part of the final cylindrical section 55 forms the top surface 56. At the center of the top surface 56 of the component 50.7 there is a hole 57 for inserting a tool (e.g., a wrench) to aid in transporting and/or securing the part. It should be noted that other connections would still be viable in addition to the illustrated hexagonal connection, such as, for example, a square connection or other desirable connection.

It can be seen that in this embodiment the upper surface 56 of the sealing component 50.7 is designed to be aligned with the top surface 18 of the fixation cylinder 10. Furthermore, in this embodiment the mid region of the sealing component, precisely at the height of the lower part of the ridged band 52b14, is not conical, but defined by a right angle that creates a lower perimeter surface that rests on the top of the perimeter platform 20 of the fixation cylinder 10.

It should be emphasized that the presented variants are merely illustrative, wherein one is an alternative to the other. Modifications may be applied to the presented components, and are still covered by the scope of protection described herein. For example, Figure 18 shows a constructive possibility of the present invention intended, more specifically, for use with distal implants, since it foresees the coupling of a distal bar 60 to reinforce the cantilever. In this case, a fixation cylinder 100 with differentiated geometry in the upper region 101 may be used to allow the locking of the cylindrical region 61 of the cantilever 60. The lower region of the fixation cylinder 100 may be foreseen with a vertical profile provided with cavities 102 to promote a greater region of penetration and adhesion of the resin during the capture step.

According to all the information presented above, it is possible that the fixation cylinder 10 and the sealing component 50 leave the factory properly pressed together to facilitate use by the implantologist, however, nothing prevents such parts from being sold separately.

### - Method of converting removable dental prosthesis into fixed dental prosthesis:

From this point on, the present specification will formally describe the method of converting removable prostheses into fixed prostheses in two conditions: (i) in the office, so that the patient can have the implants installed in a single visit to the professional and leave with the prosthesis converted into a fixed prosthesis; (ii) in a laboratory environment, in which case the conversion process is not performed on the same day as the implants are installed. Therefore, in order to use the system presented herein in the aforementioned flows, it is initially necessary that (**1**) the removable prosthesis be removed from the patient's mouth, and that (**2**) the implants be properly installed in the patient's mandible or maxilla, and the intermediate prosthetic components be properly fixed to them.

As explained for the system described above, variations of this procedure can also be applied to the method disclosed herein, for example: the transfer of the cylinder can occur before suturing, the carbon marking process can occur directly on the intermediate component, or on the cylinder already with the sealing component. It is important to emphasize that the preferred forms will be depicted herein, but these variations will still be included within the same inventive concept.

From this point on, and as illustrated in the attached Figure 12, the conversion method now disclosed comprises the following steps:
1000 - Positioning a dental carbon sheet over the implant 40 + prosthetic component 30 sets already installed in the patient's oral cavity. If the prosthesis has a pronounced concavity and it is difficult to find the position using the carbon sheet, a temporary resin can be used to fill the cavity to help mark it with the carbon sheet. This temporary resin is then removed from the prosthesis once the position has been found. Other techniques for marking the cylinder position, different from those using carbon sheets, can also be applied to this technique;
1001 - Positioning the existing removable prosthesis in the place of use in the patient's mouth, pressing it lightly so that the carbon records the position of the prosthetic components 30 at the base of said prosthesis;
1002 - Using a dental drill, open cavities in the base of the existing prosthesis, in the places marked by carbon, which correspond to the position of the prosthetic components 30 and, therefore, to the places where the fixation cylinders 10 will be positioned.
1003 - Installing the removable prosthesis conversion system into a fixed prosthesis on the prosthetic component 30 placed in the patient's mouth. In the embodiments wherein the sealing component 50 is already sold together with the fixation cylinder 10, simply positioning the fixation cylinder 10 on the prosthetic component 30 and then use a torque-controlled wrench to gently rotate the sealing component 50 until it is observed that the cylinder 10 is firmly attached to the prosthetic component 30;
1004 - Repeating the above step for all prosthetic components 30 installed in the patient's oral cavity;
1005 - Applying a generous layer of polymerizable acrylic resin for dental use on the base, or in the hollow channel existing in the base of the existing prosthesis;
1006 - Applying a generous layer of polymerizable acrylic resin for dental use around the fixation cylinders 10, whose circular openings 19 are properly sealed by the sealing components 50;
1007 - Positioning the existing prosthesis at the place of use in the patient's mouth, asking the patient to exert gentle occlusal force until the acrylic resin has solidified;
1008 - After the acrylic resin has completely solidified, removing the prosthesis from the patient's oral cavity. This operation is called "pull out" and can be performed with the aid of a suitable instrument to exert leverage. It should be noted that removing the prosthesis involves capturing the cylinder with the sealing component by the resin and, consequently, incorporating these elements into the base of the prosthesis;
1009 - Using a suitable tool, sanding the base of the prosthesis to remove excess resin and to make the base uniform;
1010 - Attaching a fine drill bit to the inside of the pre-hole 512 of the sealing component 50, and drill the prosthesis for subsequent insertion of the definitive fixation screw. This hole is called a "chimney" and is known in the field of the invention. It should be noted that at this step the professional may optionally use a separate guide element coupled to the base of the fixation cylinder 10 as an auxiliary instrument for drilling the chimneys, which helps to preserve dimensions 21 and 20 of the fixation cylinder 10; repeating the operation of the previous step in all fixation cylinders 10 incorporated into the base of the prosthesis;
1011 - Using a drill compatible with the fixation screw to be used, enlarging the diameter of the chimneys by drilling them in the opposite direction, that is, from the teeth towards the base of the prosthesis;
1012 - Uniformizing the resin on the prosthesis base and, if necessary, polishing it and finishing it. At this step, the professional can optionally attach polishing protectors to the fixation cylinders 10;
1013 - Positioning the prosthesis in the place of use and, with the aid of a torque wrench, inserting the fixation screws into the chimneys and screwing them into the prosthetic components 10 so that the previously removable prosthesis is now fixed in the patient's mouth;
1014 - Applying resin to close the chimneys and completing the installation.

It is important to clarify that the flow planned for the office environment allows the patient to leave the session with the prosthesis properly installed and fixed, that is, it does not require any compromise to the patient's aesthetic appearance between the start of the procedure (installation of the implants) and its conclusion with the fixation of the prosthesis.

However, there may be cases wherein the implantologist may find it necessary or prefer to perform the conversion of the prosthesis in a laboratory environment, that is, at a date after the implant is installed. This may occur, for example, due to some specific condition related to the patient's bone structure, their general health status, or for any other reason at the discretion of the implantologist. If this is the case, the patient will need to make two visits to the dentist, as shown in the laboratory conversion flow, which will include the following steps:
2000 - Patient visit to the dentist / day 1: after installing the implants 40 and fixing the prosthetic components 30, a transfer must be attached to each prosthetic component 30 and then the patient's arch must be molded with the aid of a mold;
2001 - After the appropriate waiting period, removing the mold containing the transfer materials that were captured during the impression from inside the patient's mouth;
2002 - Optional step: installing a healing cap or cover screw over each prosthetic component 30 so that they remain there during the period of conversion of the prosthesis to be made in the laboratory;
2003 - Start of the prosthetic step (in the laboratory): installing an analogue of the prosthetic component 30 on each transfer captured in step 2001 and, using plaster or similar material, preparing the working model containing replicas of the prosthetic components 30 already installed in the patient;
2004 - installing the removable prosthesis conversion system into a fixed prosthesis on the replica of the prosthetic component 30 of the working model. In the embodiments wherein the cylinder is already produced with the sealing component 50 next to the fixation cylinder 10, it is sufficient to position the conversion system on the replica and then use a torque wrench to promote a gentle rotation of the sealing component 50 until it is observed that the cylinder 10 is firmly attached to the replica;
2005 - Repeating the above step for all existing replicas in the plaster working model;
2006 - Applying a generous layer of polymerizable acrylic resin for dental use on the base, or in the hollow channel existing in the base of the existing prosthesis;
2007 - Applying a generous layer of polymerizable acrylic resin for dental use on the plaster model and around the fixation cylinders 10, whose circular openings 19 are properly sealed by the sealing components 50;
2008 - Positioning the existing prosthesis on the plaster model, in a position corresponding to that used by the patient, and applying gentle pressure until the acrylic resin has solidified;
2009 - After the acrylic resin has completely solidified, removing the prosthesis from the plaster model. It should be noted that removing the prosthesis involves capturing the conversion system by the resin and, consequently, incorporating it into the base of the prosthesis. The drawing in Figure 1.3 shows how the system will be seen when incorporated into the prosthesis after the capture step;
2010 - Using a suitable tool, sanding the base of the prosthesis to remove excess resin and to make the base uniform;
2011 - Attaching a fine drill bit to the inside of the pre-hole 512 of the sealing component 50, and drill the prosthesis for subsequent insertion of the fixation screw - this hole is called a "chimney", and repeat the operation of the previous step in all the fixation cylinders 10 incorporated into the base of the prosthesis. It should be noted that in this step the professional can, optionally, use a separate guide element coupled to the base of the fixation cylinder 10 as an auxiliary instrument for drilling the chimneys;
2012 - Using a drill compatible with the fixation screw to be used, enlarging the diameter of the chimneys by drilling them in the opposite direction, that is, from the teeth towards the base of the prosthesis;
2013 - Uniformizing the resin of the prosthesis base and, if necessary, polishing it and finishing it. At this step, the professional can optionally attach polishing protectors to the fixation cylinders 10;
2014 - Patient visit to the dentist / day 2: Positioning the prosthesis in the place of use and, with the aid of a torque wrench, inserting the fixation screws into the chimneys and screwing them into the prosthetic components 10 so that the previously removable prosthesis is now fixed in the patient's mouth;
2015 - Applying resin to close the chimneys and completing the installation.

As already emphasized, additional steps may be included at the discretion of the responsible professional.

Having described a preferred embodiment, it should be understood that the scope of the present invention encompasses other possible variations, being limited only by the content of the appended claims, including possible equivalents.

## Claims

1. System of converting removable dental prostheses into fixed dental prostheses, **characterized by** the fact that it comprises:
at least one removable dental prosthesis;
at least two dental implants 40, on which two intermediate prosthetic components 30 are arranged, each receiving a fixation cylinder 10 endowed with a central hole and temporarily passed through this center by a sealing component 50,
wherein said sealing component 50 has diameter dimensions compatible with the sealing of said hole centrally disposed in cylinder 10.

2. System, according to claim 1, **characterized by** the fact that it optionally comprises four or a plurality of dental implants 40 suitably disposed in the mandible or maxilla of a patient,
wherein the distribution positioning of said implants coincides with a drilling performed in the mobile prosthesis to be converted into a fixed prosthesis.

3. System, according to claim 1, **characterized by** the fact that the intermediate prosthetic components 30 are, preferably, of the mini pillar type.

4. System, according to claim 1, **characterized by** the fact that it additionally comprises a set of tools with an interface compatible with the implants 40, the intermediate prosthetic components 30, the sealing elements 10 and implant fixation screws selected for use,
wherein it additionally comprises a resin or other conformable material.

5. System, according to claim 1, **characterized by** the fact that the fixation cylinders 10 are preferably externally provided with grooves and protrusions that favor the adhesion of resin, as well as comprise a physical structure that hinders the rotation movement after their placement on the prosthetic components 30.

6. System, according to claim 1, **characterized by** the fact that the sealing component 50 is fully extracted together with the cylinder 10 when removing the prosthesis from the patient's mouth, once the resin has cured.

7. System, according to claim 4, **characterized by** the fact that the sealing component 50 is replaced by the implant fixation screw once the steps involving resin application and curing have been completed, and once the adjustments of the removable prosthesis have been completed.

8. System, according to claim 7, **characterized by** the fact the adjustments of the removable prosthesis comprise actions selected from among the removal of the region compatible with the palate in the case of a maxillary prosthesis, the angulation of the external region compatible with the gum, the finishing of protrusions resulting from the drilling process.

9. Fixation cylinder for dental prosthesis, **characterized by** the fact that it interfaces the fixation of a removable dental prosthesis from its base to at least one implant 40 applied to the patient,
wherein said cylinder 10 has a base compatible in shape with the upper end of an intermediate prosthetic component 30 disposed between the cylinder 10 itself and the at least one implant 40, and
wherein the external face of said cylinder 10 is provided with means facilitating adhesion to conformable materials, and
wherein the central region of said cylinder 10 is provided with a passage capable of receiving a sealing component 50 or an implant fixation screw.

10. Fixation cylinder for dental prosthesis, **characterized by** the fact that it interfaces the fixation of a removable dental prosthesis from its base to at least two implants applied to the patient, wherein
- said cylinder 10.1 has a body in the frustoconical shape, defined by an annular base 11 with an external diameter equivalent to the diameter of a flat platform 31 of an intermediate prosthetic component 30;
- said fixation cylinder 10.1 has a lower region 12 with a frustoconical profile and provided with a toroidal contour rib 13, and an upper region 14 consisting of frustoconical platforms 15 arranged parallel to each other and with progressively smaller external diameters in the upward direction,
said frustoconical platforms 15 being joined together by cylindrical recesses 16 and provided, on one or both sides, with vertical cutouts 17 applied to two or more platforms 15;
- said fixation cylinder 10.1 has a flat top surface 18 and is provided with a central circular opening 19 for accessing a cylindrical internal compartment,
the cylindrical internal compartment extending downwards until reaching a perimeter platform 20 provided with an internal mid hole 21 with a smaller diameter than the circular opening 19, but with a diameter corresponding to the passage of a sealing component 50 or a fixation screw,
wherein below said perimeter platform 20 there is a second internal compartment 22 with dimensions equivalent to those of the upper portion of the intermediate prosthetic component 30.

11. Fixation cylinder for dental prosthesis, **characterized by** the fact that it interfaces the fixation of a removable dental prosthesis from its base to at least two implants applied to the patient, wherein
- said fixation cylinder 10.2 has a body in the frustoconical shape, defined by an annular and convex region 110.1, the closure of the external diameter of which coincides with a diameter of a flat platform 31 of an intermediate prosthetic component 30;
- said fixation cylinder 10.2 has a toroidal contour rib 130 arranged above the annular and convex region 110.1 and with a reduction in diameter in relation to the region 110.1 itself;
- said fixation cylinder 10.2 has a second diameter reduction 110.2 preceding the arrangement of a set of three frustoconical platforms 15 joined together by cylindrical recesses 16 with a diameter reduction to a minimum corresponding to the diameter of a sealing component 50,
one or more of said three frustoconical platforms 15 being provided on one or both sides with vertical cutouts 17,
- said fixation cylinder 10.2 has a flat top surface 18 and is provided with a central circular opening 19 for accessing a cylindrical internal compartment,
the cylindrical internal compartment extending downwards until reaching a perimeter platform 20 provided with an internal mid hole 21 with a smaller diameter than the circular opening 19, but with a diameter corresponding to the passage of a sealing component or a fixation screw,
wherein below said perimeter platform 20 there is a second internal compartment 22 with dimensions equivalent to those of the upper portion of the prosthetic component 30.

12. Fixation cylinder for dental prosthesis, **characterized by** the fact that it interfaces the fixation of a removable dental prosthesis from its base to at least two implants applied to the patient, wherein
- said fixation cylinder 10.3 has a body in the frustoconical shape, defined by an annular support region 110.1a for a convex annular region 110.1, the closure of the external diameter of these two elements together coincides with the diameter of the flat platform 31 of an intermediate prosthetic component 30;
- said fixation cylinder 10.3 is provided with a toroidal contour rib 130 after the annular and convex region 110.1 in an upward direction, which promotes a reduction in diameter in relation to the region 110.1 itself;
- said fixation cylinder 10.3 is equipped with a second reduction in diameter in an upward direction, which precedes a first platform 15.a with a ridged shape that introduces the arrangement of a set of frustoconical platforms 15 joined together by cylindrical recesses 16,
said assembly comprising three platforms 15 interspersed by two recesses 16 promoting a reduction in diameter to a minimum corresponding to the diameter of a sealing component 50,
one or more of said three frustoconical platforms 15 being provided on one or both sides with vertical cutouts 17;
- said fixation cylinder 10.3 has a flat top surface 18 and is provided with a central circular opening 19 for accessing a cylindrical internal compartment,
the cylindrical internal compartment extending downwards until reaching a perimeter platform 20 provided with an internal mid hole 21 with a smaller diameter than the circular opening 19, but with a diameter corresponding to the passage of a sealing component or a fixation screw,
wherein below said perimeter platform 20 there is a second internal compartment 22 with dimensions equivalent to those of the upper portion of the prosthetic component 30.

13. Cylinder sealing component in prosthetic procedures, for placement on an intermediate prosthetic component 30, **characterized by** the fact that:
- said sealing component 50 is manufactured from flexible material, preferably of the polymer type;
- said sealing component 50 comprises a lower rod 51 whose lower end has fixation means and is provided with a pre-hole 512;
- said sealing component 50 comprises an upper region provided with an end section 55 with a diameter larger than the diameter of a circular opening 19 in a top surface 18 of the cylinder;
- said sealing component 50 being firmly fixed to the cylinder by means of the application of controlled torque through a tool inserted into a hole 57 provided at the center of a top surface 56, and
- said sealing component 50 being extracted together with the cylinder, both adhered to the conformable material arranged in the prosthesis, after the material curing procedure.

14. Cylinder sealing component in prosthetic procedures, for placement on an intermediate prosthetic component 30, **characterized by** the fact that:
- said sealing component 50 is manufactured from flexible material, preferably of the polymer type;
- said sealing component 50 comprises a lower rod 51 whose lower end has fixation means and is provided with a pre-hole 512;
- said sealing component 50 comprises an intermediate region whose lower portion has a diameter greater than the diameter of an internal mid hole 21 of an internal perimeter platform 20 and located in the middle region of the cylinder;
- said sealing component 50 comprises an upper region provided with an end section 55 with a diameter adjusted to the diameter of a circular opening 19 in a top surface 18 of the cylinder;
- said sealing component 50 being firmly fixed to the cylinder by means of the application of controlled torque through a tool inserted into a hole 57 provided at the center of a top surface 56, and
- the said sealing component 50 being extracted together with the cylinder, both adhered to the conformable material arranged in the prosthesis, after the material curing procedure.

15. Method of converting removable dental prosthesis into fixed dental prosthesis, in a dental office environment, **characterized by** the fact that it comprises the following steps:
- (1) removing the removable denture from the patient's mouth;
- (2) installing implants (40) in the patient's mandible or maxilla, and fixing a prosthetic component (30) on each implant (40);
- (1000) positioning a dental carbon sheet over the sets comprising dental implant (40) and prosthetic component (30) already installed in the patient's oral cavity;
- (1002) drilling cavities in the base of the existing prosthesis, at the locations marked by carbon, which correspond to the position of the prosthetic components (30) and, therefore, of the fixation cylinders (10);
- (1003) positioning the fixation cylinder (10) on the prosthetic component (30) and, using a torque tool, rotating the sealing component (50) until it is observed that the cylinder (10) is firmly attached to the prosthetic component (30);
- (1004) repeating step (1003) for all prosthetic components (30) installed on implants (40) in the patient's oral cavity;
- (1005) applying a layer of polymerizable acrylic resin for dental use over the base, or hollow channel of the base of the existing prosthesis;
- (1006) applying a layer of polymerizable acrylic resin for dental use around the fixation cylinders (10), whose circular openings (19) are properly sealed by the sealing components (50);
- (1007) Positioning the existing prosthesis at the place of use in the patient's mouth, and asking the patient to exert gentle occlusal force until the acrylic resin has solidified;
- (1008) after the acrylic resin has completely solidified, removing the prosthesis comprising the conversion system incorporated into its base from the patient's oral cavity;
- (1009) sanding the base of the prosthesis to remove excess resin and make it uniform;
- (1010) attaching a fine drill bit to the inside of the pre-hole (512) of the sealing component (50), and drilling a hole called a "chimney" in the prosthesis, from the base towards the teeth, for subsequent insertion of a fixation screw; repeating this procedure for all fixation cylinders (10) incorporated into the base of the prosthesis;
- (1011) using a drill compatible with the fixation screw to be used, enlarging the diameter of the chimneys by drilling them in the direction of the teeth towards the base of the prosthesis;
- (1012) uniformizing the resin on the prosthesis base, polishing it and finishing it;
- (1013) positioning the prosthesis in the place of use and, with the aid of a torque tool, inserting the fixation screws into the chimneys and screwing them into the prosthetic components (10) so that the prosthesis is fixed in the patient's mouth;
- (1014) Applying resin to close the chimneys and completing the installation.

16. Method of converting removable dental prosthesis into fixed dental prosthesis, in a laboratory environment, **characterized by** the fact that it comprises the following steps:
- (1) removing the removable denture from the patient's mouth;
- (2) installing the implants (40) in the patient's mandible or maxilla, and fixing a prosthetic component (30) on each implant (40);
- (2000) attaching a transfer to each prosthetic component (30) and making a mold of the patient's arch with the aid of a mold;
- (2001) after the appropriate waiting period, removing the mold containing the transfers that were captured during the impression from inside the patient's mouth;
- (2002) optionally, installing a healing cap or cover screw over each prosthetic component (30) so that they remain there during the period of conversion of the prosthesis to be made in the laboratory;
- (2003) installing an analogue of the prosthetic component (30) on each transfer captured in step (2001) and, using plaster or similar material, preparing the working model containing replicas of the prosthetic components (30) already installed in the patient's mouth;
- (2004) positioning the conversion system over the replica of the prosthetic component (30) and using a torque tool to rotate the sealing component (50) until the cylinder (10) is fixed to the replica;
- (2005) repeating step (2004) for all existing replicas in the working model;
- (2006) applying a layer of polymerizable acrylic resin for dental use on the base, or in the hollow channel existing in the base of the existing prosthesis;
- (2007) applying a layer of polymerizable acrylic resin for dental use on the working model and around the fixation cylinders (10, 100), whose circular openings (19) are properly sealed by the sealing components (50);
- (2008) positioning the existing prosthesis on the plaster model, in a position corresponding to that used by the patient, and applying gentle pressure until the acrylic resin has solidified;
- (2009) after the acrylic resin has completely solidified, removing the prosthesis from the plaster model, including the conversion system incorporated into its base;
- (2010) sanding the base of the prosthesis to remove excess resin and make it uniform;
- (2011) attaching a fine drill bit to the inside of the pre-hole (512) of the sealing component (50), and drilling a hole called a "chimney" in the prosthesis, from the base towards the teeth, for subsequent insertion of a fixation screw; repeating this procedure for all fixation cylinders (10) incorporated into the base of the prosthesis;
- (2012) using a drill compatible with the fixation screw to be used, enlarging the diameter of the chimneys by drilling them from the teeth towards the base of the prosthesis;
- (2013) uniformizing the resin on the prosthesis base, polishing it and finishing it;
- (2014) positioning the prosthesis in the place of use and, with the aid of a torque tool, inserting the fixation screws into the chimneys and screwing them into the prosthetic components (10) so that the prosthesis is fixed in the patient's mouth;
- (2015) Applying resin to close the chimneys and completing the installation.
